# EUROPÄISCHE PATENTSCHRIFT

(11) **EP 4 707 616 B1**
(45) Veröffentlichungstag und Bekanntmachung des Hinweises auf die Patenterteilung: **26.08.2026**
(21) Anmeldenummer: 25222305.2
(22) Anmeldetag: 31.10.2024
(51) Int. Cl.: F16C 32/04, F04D 29/048

(54) **MAGNETLAGERVORRICHTUNG UND ZENTRIFUGALPUMPE**
MAGNETIC BEARING DEVICE AND CENTRIFUGAL PUMP
DISPOSITIF DE PALIER MAGNÉTIQUE ET POMPE CENTRIFUGE

(30) Priorität: 15.11.2023 EP 23210165
(43) Veröffentlichungstag der Anmeldung: 11.03.2026
(62) Dokumentnummer(n) der früheren Anmeldung(en) nach Art. 76 EPÜ: 24210076.6 / 4 556 731
(73) Patentinhaber: Levitronix GmbH, 8048 Zürich (CH)
(72) Erfinder: Stettler, Marcel, 4800 Zofingen (CH); Schneeberger, Thomas, 3006 Bern (CH); Barletta, Natale, 8048 Zürich (CH); Hinni, Patrick, 8754 Netstal (CH)
(74) Vertreter: IPS Irsch AG

(56) Entgegenhaltungen:
- EP-A1- 0 899 857
- WO-A1-2014/036419
- WO-A1-2019/125718
- CN-A- 106 922 079
- US-A1- 2012 156 071
- US-A1- 2014 062 239
- US-A1- 2016 065 037

## Beschreibung

Die Erfindung betrifft einen Magnetlagervorrichtung gemäss dem Oberbegriff des unabhängigen Patentanspruchs und eine Zentrifugalpumpe mit einer solchen Magnetlagervorrichtung.

Magnetlagervorrichtungen zur berührungslos magnetischen Lagerung eines Rotors haben den Vorteil, dass sie ohne mechanische Lager für den Rotor auskommen. Der Rotor wird mittels magnetischer Kräfte gelagert bzw. stabilisiert, die von einem Stator der Magnetlagervorrichtung generiert werden. Aufgrund der Abwesenheit von mechanischen Lagern eignen sich solche Magnetlagervorrichtungen insbesondere für Pump-, Misch-, Zentrifugier- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry, Schwefel-, Phosphorsäure oder andere Chemikalien in der Halbleiterindustrie.

In der biotechnologischen Industrie werden solche Magnetlagervorrichtungen beispielsweise im Zusammenhang mit Bioreaktoren eingesetzt, z. B. bei Zentrifugalpumpen zum Fördern der Fluide in den oder aus dem Bioreaktor, oder bei Mischvorrichtungen, welche die Fluide in dem Bioreaktor durchmischen. In der Halbleiterindustrie werden solche Magnetlagervorrichtung nicht nur für das Fördern aggressiver oder abrasiver Substanzen verwendet, sondern beispielsweise auch für Rotationsvorrichtungen, mit denen Wafer rotiert werden.

Auch ist es bekannt, Magnetlagervorrichtungen für Viskosimeter zu verwenden.

Eine vorteilhafte und an sich bekannte Ausführungsform einer Magnetlagervorrichtung ist die Ausführung in Tempelbauweise, auf die sich auch die vorliegende Erfindung bezieht.

Das Charakteristische der Tempelbauweise ist es, dass der Stator der Magnetlagervorrichtung eine Mehrzahl von Spulenkernen aufweist, von denen jeder einen Längsschenkel umfasst, der sich von einem ersten Ende in einer axialen Richtung bis zu einem zweiten Ende erstreckt. Mit der axialen Richtung ist dabei diejenige Richtung gemeint, welche durch die Solldrehachse des Rotors definiert ist, welcher mit der Magnetlagervorrichtung gelagert wird. Die Solldrehachse ist diejenige Drehachse, um welche der Rotor im Betriebszustand rotiert, wenn er bezüglich des Stators in einer zentrierten und unverkippten Position ist. Jeder Spulenkern umfasst zusätzlich zu dem Längsschenkel einen Querschenkel, welcher jeweils an dem zweiten Ende des Längsschenkels angeordnet ist, und welcher sich in radialer Richtung - üblicherweise nach innen - erstreckt, wobei die radiale Richtung senkrecht zur axialen Richtung ist. Der Querschenkel erstreckt ich also im Wesentlichen rechtwinklig zum Längsschenkel. Die Spulenkerne haben jeweils die Form eines L, wobei die Querschenkel die kurzen Schenkel des L bilden. Der zu lagernde Rotor ist dann zwischen den Querschenkeln angeordnet.

Die Mehrzahl der Längsschenkel, die sich in axialer Richtung erstrecken und an die Säulen eines Tempels erinnern, hat dieser Bauweise ihren Namen gegeben.

In einer Ausführungsform hat der Stator der Magnetlagervorrichtung beispielsweise sechs Spulenkerne, die kreisförmig und äquidistant um eine becherförmige Ausnehmung herum angeordnet sind, in welche der Rotor eingesetzt werden kann. Die ersten Enden der Längsschenkel sind üblicherweise in Umfangsichtung durch einen Rückschluss verbunden, welcher der magnetischen Flussführung dient. Der zu lagernde Rotor umfasst einen magnetisch wirksamen Kern, beispielsweise eine permanentmagnetische Scheibe oder einen permanentmagnetischen Ring, der zwischen den radial innenliegenden Enden der Querschenkel angeordnet ist und im Betriebszustand um die axiale Richtung rotiert, wobei der Rotor berührungslos magnetisch bezüglich des Stators gelagert ist.

Für solche Magnetlagervorrichtungen ist es nicht notwendiger Weise so, dass der magnetisch wirksame Kern des Rotors permanentmagnetisch ausgestaltet sein muss. Es sind auch solche Ausgestaltungen bekannt, bei denen der magnetisch wirksame Kern des Rotors permanentmagnetfrei, also ohne Permanentmagnete ausgestaltet ist. Der magnetisch wirksame Kern des Rotors ist dann beispielsweise ferromagnetisch ausgestaltet und besteht beispielsweise aus Eisen, Nickel-Eisen, Kobalt-Eisen, Silizium-Eisen, Mu-Metall oder einem anderen ferromagnetischen Werkstoff.

Ferner sind Ausgestaltungen möglich, bei denen der magnetisch wirksame Kern des Rotors sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Um die für die berührungslos magnetische Lagerung des Rotors notwendigen elektromagnetischen Felder zu erzeugen, tragen die Längsschenkel Wicklungen. Die Wicklungen sind beispielsweise so ausgestaltet, dass um jeden Längsschenkel herum eine konzentrierte Wicklung gewickelt ist, das heisst, die Spulenachse jeder konzentrierten Wicklung erstreckt sich jeweils in axialer Richtung. Dabei ist es typisch für die Tempelbauweise, dass die Spulenachsen der konzentrierten Wicklungen in der axialen Richtung verlaufen und, dass die konzentrierten Wicklungen nicht in der radialen Ebene angeordnet sind, in welcher der Rotor bzw. der magnetisch wirksame Kern des Rotors im Betriebszustand gelagert wird.

Es sind Ausgestaltungen möglich, bei denen auf jedem Längsschenkel genau eine konzentrierte Wicklung angeordnet ist. In anderen Ausgestaltungen sind auf jedem Längsschenkel mehrere, beispielsweise genau zwei konzentrierte Wicklungen vorgesehen. Auch sind Ausgestaltungen möglich, bei denen Wicklungen vorgesehen sind, die um zwei in Umfangsrichtung benachbarte Längsschenkel herum gewickelt sind, sodass sich diese beiden benachbarten Längsschenkel beide im Innenraum der konzentrierten Wicklung befinden.

Für eine zuverlässige und sichere berührungslos magnetische Lagerung des Rotors ist es sehr wichtig, die jeweils aktuelle Position des Rotors in der radialen Ebene mit hoher Genauigkeit zu kennen, sodass die Lage des Rotors in der radialen Ebene auf eine Sollposition geregelt werden kann. Zur Bestimmung der Position des Rotors ist es bekannt, beispielsweise aus der WO 2014/036419, eine Mehrzahl von Magnetfeldsensoren, beispielsweise Hall-Sensoren, in der Magnetlagervorrichtung so anzuordnen, dass sie um den magnetisch wirksamen Kern des Rotors herum angeordnet sind. Aus den Signalen der Magnetfeldsensoren wird dann die aktuelle Position des Rotors möglichst genau ermittelt. Da die Magnetfeldsensoren aber alle Magnetfelder an ihrer jeweiligen Position erfassen, also beispielsweise auch das Statormagnetfeld, ist es oft sehr schwierig, die genaue Position des Rotors in der radialen Ebene aus den Signalen der Magnetfeldsensoren zu ermitteln.

Eine gattungsgemäße Magnetlagervorrichtung wird in US 2012/156071 A1 offenbart.

Ausgehend von diesem Stand der Technik ist es daher eine Aufgabe der Erfindung, eine Magnetlagervorrichtung zur berührungslos magnetischen Lagerung eines Rotors mit einem ring- oder scheibenförmigen magnetisch wirksamen Kern vorzuschlagen, bei welcher die Position des Rotors mittels Magnetfeldsensoren zuverlässig und mit sehr hoher Genauigkeit ermittelt werden kann. Ferner ist es eine Aufgabe der Erfindung, eine Zentrifugalpumpe mit einer solchen Magnetlagervorrichtung vorzuschlagen.

Der diese Aufgabe lösende Gegenstand der Erfindung ist durch die Merkmale des unabhängigen Patentanspruchs gekennzeichnet.

Erfindungsgemäss wird also eine Magnetlagervorrichtung zur berührungslos magnetischen Lagerung eines Rotors, der einen scheibenförmigen oder ringförmigen magnetisch wirksamen Kern umfasst, wobei die Magnetlagervorrichtung einen Stator aufweist, welcher eine Mehrzahl von Spulenkernen umfasst, von denen jeder einen Längsschenkel umfasst, welcher sich von einem ersten Ende in einer axialen Richtung bis zu einem zweiten Ende erstreckt, sowie einen Querschenkel, welcher an dem zweiten Ende des Längsschenkels angeordnet ist, und sich in einer radialen Richtung erstreckt, die senkrecht zur axialen Richtung ist, wobei an jedem Längsschenkel mindestens eine konzentrierte Wicklung vorgesehen ist, welche den jeweiligen Längsschenkel umgibt, wobei der Stator ferner eine becherförmige Ausnehmung aufweist, in welche der Rotor einsetzbar ist, wobei die becherförmige Ausnehmung an einem axialen Ende des Stators angeordnet ist, wobei die Querschenkel um die becherförmige Ausnehmung herum angeordnet sind, und wobei eine Mehrzahl von Magnetfeldsensoren zur Bestimmung der Position des Rotors um die becherförmigen Ausnehmung herum angeordnet ist, wobei eine ringförmige Halteeinrichtung für die Magnetfeldsensoren vorgesehen ist, wobei bei der Magnetlagervorrichtung bezüglich der axialen Richtung zwischen den Wicklungen und den Querschenkeln eine Platine angeordnet ist, auf welcher alle Magnetfeldsensoren angeordnet sind, und wobei die Halteeinrichtung zum Aufnehmen der Platine ausgestaltet ist.

Gemäss einer bevorzugten Ausgestaltung ist die Magnetlagervorrichtung ausgestaltet zur berührungslos magnetischen Lagerung eines Rotors, der einen scheibenförmigen oder ringförmigen magnetisch wirksamen Kern umfasst, wobei die Magnetlagervorrichtung einen Stator aufweist, welcher eine Mehrzahl von Spulenkernen umfasst, von denen jeder einen Längsschenkel umfasst, welcher sich von einem ersten Ende in einer axialen Richtung bis zu einem zweiten Ende erstreckt, sowie einen Querschenkel, welcher an dem zweiten Ende des Längsschenkels angeordnet ist, und sich in einer radialen Richtung erstreckt, die senkrecht zur axialen Richtung ist, wobei an jedem Längsschenkel mindestens eine konzentrierte Wicklung vorgesehen ist, welche den jeweiligen Längsschenkel umgibt, wobei der Stator ferner eine becherförmige Ausnehmung aufweist, in welche der Rotor einsetzbar ist, wobei die becherförmige Ausnehmung an einem axialen Ende des Stators angeordnet ist, wobei die Querschenkel um die becherförmige Ausnehmung herum angeordnet sind, und wobei eine Mehrzahl von Magnetfeldsensoren zur Bestimmung der Position des Rotors um die becherförmigen Ausnehmung herum angeordnet ist. Es ist eine ringförmige Halteeinrichtung für die Magnetfeldsensoren vorgesehen, welche für jeden Magnetfeldsensor eine Kavität aufweist, die bezüglich der radialen Richtung von einer innenliegenden Wand und von einer aussenliegenden Wand begrenzt wird, wobei der Magnetfeldsensor in die Kavität einschiebbar ist, und wobei die Kavität so dimensioniert ist, dass die innenliegende Wand und die aussenliegende Wand flächig an dem Magnetfeldsensor anliegen.

Dadurch, dass eine ringförmige Halterung vorgesehen ist, die für jeden Magnetfeldsensor eine Kavität aufweist, die so dimensioniert ist, dass die innenliegende Wand und die aussenliegende Wand flächig an dem Magnetfeldsensor anliegen, ist die jeweilige Position des Magnetfeldsensors mit einer äusserst hohen Genauigkeit bekannt. Insbesondere die Position der Magnetfeldsensoren relativ zu der becherförmigen Ausnehmung ist mit hoher Genauigkeit bekannt, was eine sehr genaue Bestimmung der Position des Rotors in der becherförmigen Ausnehmung ermöglicht. Insbesondere ist die Position des jeweiligen Magnetfeldsensors nur durch die Lage der Kavität definiert und hängt nicht davon ab, wie beispielsweise der Magnetfeldsensor auf einer Platine festgelötet ist oder an einer Struktur festgeklebt ist. Wenn die Position eines Magnetfeldsensors auch durch solche Verbindungen wie Löten oder Kleben bestimmt wird, so resultiert hieraus in aller Regel eine Ungenauigkeit der Platzierung, welche sich negativ auf die Genauigkeit der Positionsbestimmung des Rotors auswirkt. Da bei der erfindungsgemässen Ausgestaltung Löt- oder Klebeverbindungen die Position des Magnetfeldsensors nicht beeinflussen können, resultiert eine sehr hohe Genauigkeit der Bestimmung der Rotorposition.

Gemäss einer bevorzugten Ausgestaltung ist bezüglich der axialen Richtung zwischen den Wicklungen und den Querschenkeln eine Platine angeordnet, auf welcher alle Magnetfeldsensoren angeordnet sind, und die Halteeinrichtung ist zum Aufnehmen der Platine ausgestaltet. Das hat den Vorteil, dass zunächst alle Magnetfeldsensoren mit der Platine verbunden werden können, wobei die elektrischen Verbindungen zum Ansteuern der Magnetfeldsensoren und zum Empfangen der Messsignale auf der Platine hergestellt werden. Anschliessend wir dann die Platine mit den mit ihr verbundenen Magnetfeldsensoren in die Halteeinrichtung eingesetzt, wobei die Magnetfeldsensoren in die Kavitäten eingeschoben werden. Schliesslich wird die Platine fest mit der Halteeinrichtung verbunden, beispielsweise mittels Schrauben und/oder mittels einer Vergussmasse, mit welcher die Halteinrichtung ausgegossen wird.

Dabei ist es bevorzugt, dass die Halteeinrichtung einen ringförmigen Rand mit einem daran vorgesehen Absatz aufweist, wobei der Absatz radial innenliegend bezüglich des Rands angeordnet ist, und wobei die Platine an dem Absatz anliegt. Dieser Absatz bildet also eine Auflage für die Platine, sodass diese in sehr einfacher Weise in der Halteeinrichtung platziert werden kann.

Ferner ist es bevorzugt, dass der Rand derart ausgestaltet ist, dass er die Platine bezüglich der axialen Richtung überragt. Durch diese Massnahme ist es möglich, die Halteeinrichtung mit einer Vergussmasse auszugiessen, wobei die Platine vollständig von der Vergussmasse überdeckt wird.

Gemäss einer bevorzugten Ausführungsform weist die Halteeinrichtung für jeden Spulenkern eine separate Aussparung auf, welche den Spulenkern umschliesst und den Querschenkel des Spulenkerns aufnimmt.

Hierbei ist es vorteilhaft, dass jede Kavität bezüglich der Umfangsrichtung zwischen zwei benachbarten Aussparungen angeordnet ist. Dadurch ist es möglich, dass jeder Magnetfeldsensor bezüglich der Umfangsrichtung jeweils zwischen zwei benachbarten Spulenkernen angeordnet ist.

Gemäss einer besonders bevorzugten Ausführungsform sind bei der Magnetlagervorrichtung genau sechs Spulenkerne vorgesehen.

Ferner ist es bevorzugt, dass die Magnetlagervorrichtung genau sechs Magnetfeldsensoren umfasst, die vorzugsweise äquidistant um die becherförmige Ausnehmung herum angeordnet sind.

In einer bevorzugten Ausgestaltung ist die Halteeinrichtung mit einer ersten Vergussmasse aufgefüllt, derart, dass die Platine vollständig von der Vergussmasse bedeckt ist. Die erste Vergussmasse ist besonders bevorzugt eine weiche Vergussmasse. Mit einer weichen Vergussmasse ist im Rahmen dieser Anmeldung eine Vergussmasse gemeint, welche eine Shore-Härte D von weniger als 40 aufweist. Als erste Vergussmasse ist beispielsweise ein Silikon oder ein Polyurethan geeignet.

Gemäss einer besonders bevorzugten Ausgestaltung sind die Spulenkerne mit den darauf angeordneten Wicklungen in einem Gehäuse angeordnet, welches mit einer zweiten Vergussmasse ausgegossen, wobei die zweite Vergussmasse eine thermisch leitfähige Vergussmasse ist, Diese zweite, thermisch leitfähige Vergussmasse ist eine harte thermische Vergussmasse, beispielsweise ein Epoxidharz. Folglich sind die erste Vergussmasse und die zweite, thermische Vergussmasse verschieden voneinander. Während des Betriebs der Magnetlagervorrichtung können insbesondere im Bereich der Halteeinrichtung mit den darin angeordneten Magnetfeldsensoren stärkere und häufige Temperaturschwankungen auftreten. Gegen solche ist eine weiche Vergussmasse besser beständig. Daher ist für das Ausgiessen der Halteeinrichtung eine weiche Vergussmasse bevorzugt, die weicher ist als die harte Vergussmasse, mit welcher das Gehäuse ausgegossen ist. Die zweite Vergussmasse, welche insbesondere die Spulenkerne und die darauf angeordneten Wicklungen umschliesst, weist bevorzugt eine besonders gute thermische Leitfähigkeit auf, um die generierte Wärme, z. B. die durch Kupferverluste und Eisenverluste generierte Wärme, möglichst effizient abzuführen. Um eine hohe thermische Leitfähigkeit zu erreichen, werden der zweiten, thermischen Vergussmasse vorzugsweise thermisch gut leitende Füllstoffe beigemischt, beispielsweise Graphit Pulver, Kohlefasern, Carbon-Nanotubes, Aluminiumoxid Pulver, Bornitrid Pulver oder andere Keramik Pulver. Diese Füllstoffe verbessern die thermische Leitfähigkeit, bewirken aber auch eine höhere Härte der ausgehärteten Vergussmasse. Daher weist die zweite, thermische Vergussmasse eine grössere Härte, insbesondere eine grössere Shore-Härte D auf als die erste Vergussmasse.

Im Hinblick auf eine möglichst genaue Positionierung der Magnetfeldsensoren ist es vorteilhaft, dass für jede Kavität jeweils ein separates Führungselement vorgesehen ist, welches die innenliegende Wand oder die aussenliegende Wand bildet, durch welche die Kavität begrenzt wird. Solche separaten Führungselemente lassen sich üblicherweise einfacher mit einer sehr hohen Präzision herstellen als die gesamte Halteeinrichtung, die beispielsweise mittels eines Spritzgiessverfahren hergestellt wird. Zur Bildung der Kavität für den Magnetfeldsensor wird das separate Führungselement in axialer Richtung in eine dafür vorgesehene Ausnehmung der Halteeinrichtung eingeführt, sodass es anschliessend die innenliegende Wand oder die aussenliegende Wand bildet, welche die Kavität bezüglich der radialen Richtung begrenzen. Vorzugsweise ist das separate Führungselement formschlüssig, beispielsweise mittels eines Presssitzes, mit der Halteeinrichtung verbunden.

Vorzugsweise weist der Stator einen Spalttopf auf, welcher ein axiales Ende des Stators bildet, wobei der Spalttopf die becherförmige Ausnehmung aufweist, in welche der Rotor einsetzbar ist, und wobei der Spalttopf die Halteeinrichtung radial aussenliegend umfasst. Bei dieser bevorzugten Ausgestaltung ist der Spalttopf vorzugsweise als separater Spalttopf ausgebildet, welcher die becherförmige Ausnehmung aufweist. Insbesondere aus konstruktiven Gründen ist es bevorzugt, dass der Spalttopf die zweite Halteeinrichtung radial aussenliegend umfasst. Dabei ist ein axialer Endbereich der zweiten Halteeinrichtung innerhalb des Spalttopfes angeordnet und wird von diesem in Umfangsrichtung gesehen vollständig umschlossen.

Vorzugsweise ist die Halteeinrichtung aus einem Kunststoff hergestellt. Beispielsweise ist die Halteeinrichtung als Spritzgussteil ausgestaltet, das in einem Spritzgiessverfahren hergestellt wird.

Ferner ist es bevorzugt, dass der Spalttopf aus einem Kunststoff hergestellt ist. Auch der Spalttopf kann als Spritzgussteil ausgestaltet sein.

Gemäss einer bevorzugten Ausführungsform hat die Magnetlagervorrichtung ein Gehäuse, welches ein Statorgehäuse und ein Kontrollgehäuse umfasst, welche bezüglich der axialen Richtung benachbart zueinander angeordnet sind, wobei das Statorgehäuse zur Aufnahme der Spulenkerne mit den darauf angeordneten konzentrierten Wicklungen ausgestaltet ist, und das Kontrollgehäuse zur Aufnahme einer Kontrolleinheit für die Ansteuerung und die Versorgung der Wicklungen mit elektrischer Energie zur Erzeugung elektromagnetischer Felder.

Vorzugsweise ist das Gehäuse derart ausgestaltet, dass die Spulenkerne mit den darauf angeordneten konzentrierten Wicklungen in einer ersten Einbaurichtung in axialer Richtung in das Statorgehäuse einführbar sind, und die Kontrolleinheit in einer zweiten Einbaurichtung in das Kontrollgehäuse einführbar ist, wobei die erste Einbaurichtung entgegengesetzt zur zweite Einbaurichtung gerichtet ist. Dabei hat das Gehäuse vorzugsweise zwei voneinander getrennte Bereiche, von denen einer das Statorgehäuse bildet und der andere das Kontrollgehäuse. Diese beiden Bereiche können beispielsweise durch eine Wand voneinander getrennt sein, welche Durchlässe, z.B. für elektrische Verbindungen aufweist. Das Gehäuse ist dann bezüglich der Umfangsrichtung vorzugsweise einstückig ausgestaltet.

Gemäss einer besonders bevorzugten Ausführungsform ist der Stator der Magnetlagervorrichtung zur Erzeugung eines Drehmoments ausgestaltet, mit welchem der Rotor berührungslos magnetisch zur Rotation um die axiale Richtung antreibbar ist.

Durch die Erfindung wird ferner eine Zentrifugalpumpe zum Fördern eines Fluids vorgeschlagen, die eine erfindungsgemässe Magnetlagervorrichtung umfasst, sowie einen Rotor mit einem magnetisch wirksamen Kern, wobei der Rotor in die becherförmige Ausnehmung des Spalttopfes einsetzbar ist, und wobei der Rotor als Rotor der Zentrifugalpumpe ausgestaltet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine Schnittdarstellung eines Ausführungsbeispiels einer erfindungsgemässen Magnetlagervorrichtung,
- Fig. 2:: eine perspektivische Darstellung des Ausführungsbeispiels aus Fig. 1 in einer perspektivischen Explosionsdarstellung,
- Fig. 3: eine perspektivische Darstellung des Stators und der Halteeinrichtung,
- Fig. 4:: eine perspektivische Explosionsdarstellung der Spulenkerne, der Wicklungen und der Halteeinrichtung,
- Fig. 5:: eine perspektivische Darstellung der Halteinrichtung aus Richtung der ersten Enden der Längsschenkel der Spulenkerne,
- Fig. 6:: wie Fig. 5, jedoch aus entgegengesetzter Blickrichtung,
- Fig. 7:: eine perspektivische Explosionsdarstellung der Halteeinrichtung und der Platine mit den Magnetfeldsensoren,
- Fig. 8:: eine Schnittdarstellung der Halteeinrichtung mit der darin eingelegten Platine,
- Fig. 9:: das Detail I aus Fig. 8 in einer vergrösserten Darstellung,
- Fig. 10:: eine perspektivische Darstellung des Führungselements aus Fig. 9,
- Fig. 11:: eine Schnittdarstellung des Spalttopfes des Stators, und
- Fig. 12:: eine schematische Schnittdarstellung eines Ausführungsbeispiels einer erfindungsgemässen Zentrifugalpumpe in einem Schnitt in axialer Richtung.

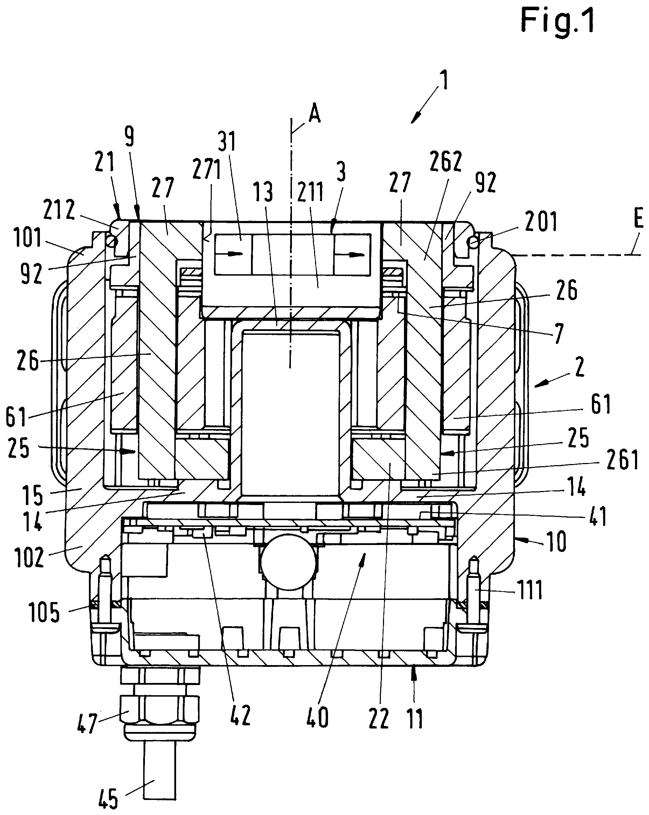

Fig. 1 zeigt eine Schnittdarstellung eines Ausführungsbeispiels einer erfindungsgemässen Magnetlagervorrichtung, die gesamthaft mit dem Bezugszeichen 1 bezeichnet ist. Die Magnetlagervorrichtung 1 ist für die berührungslos magnetische Lagerung eines Rotors 3 ausgestaltet, der einen scheibenförmigen oder ringförmigen magnetisch wirksamen Kern 31 umfasst.

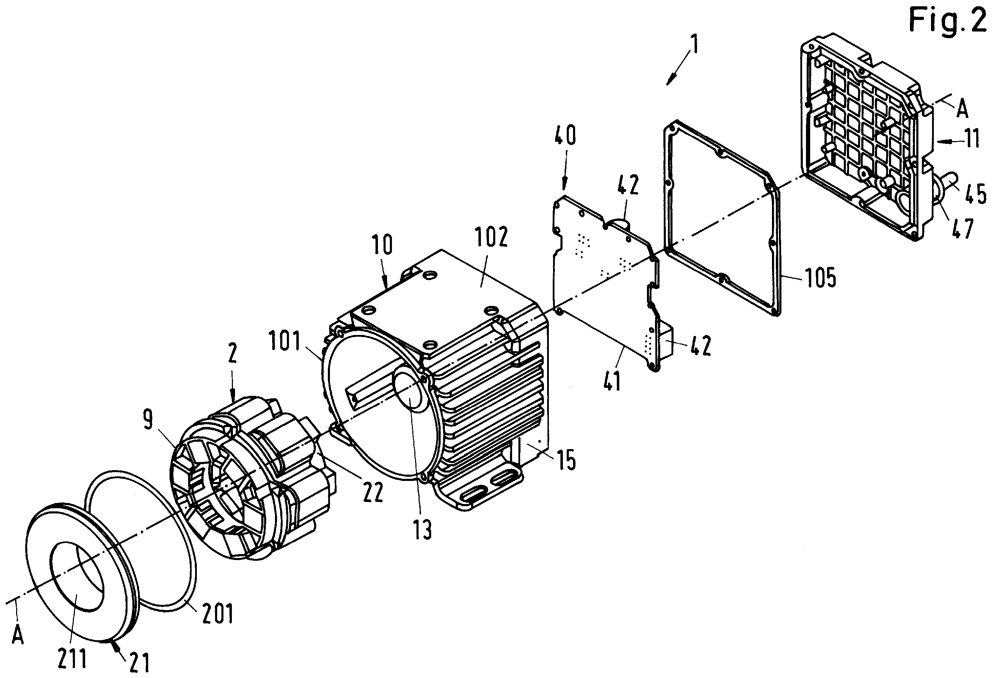

Zum besseren Verständnis zeigt Fig. 2 noch eine perspektivische Darstellung des Ausführungsbeispiels aus Fig. 1 in einer perspektivischen Explosionsdarstellung, wobei in Fig. 2 der Rotor 3 nicht dargestellt ist. Die Magnetlagervorrichtung 1 ist gemäss der Tempelbauweise ausgestaltet und umfasst einen Stator 2, welcher eine Mehrzahl von Spulenkernen 25 - hier sechs Spulenkerne 25 - aufweist, von denen jeder einen Längsschenkel 26 umfasst, welcher sich von einem ersten Ende 261 in einer axialer Richtung A bis zu einem zweiten Ende 262 erstreckt, sowie einen senkrecht zum Längsschenkel 26 angeordneten Querschenkel 27, welcher sich in einer radialen Richtung erstreckt, die senkrecht zu der axialen Richtung A ist. Jeder Querschenkel 27 wird bezüglich der radialen Richtung durch eine Stirnfläche 271 begrenzt, welche den Pol des zugehörigen Spulenkerns 25 bildet.

An jedem Längsschenkel 25 ist jeweils mindestens eine, bei diesem Ausführungsbeispiel genau eine, konzentrierte Wicklung 61 vorgesehen, welche den jeweiligen Längsschenkel 26 umschliesst.

Die Magnetlagervorrichtung 1 umfasst ein Gehäuse 10, in welchem die Spulenkerne 25 angeordnet sind.

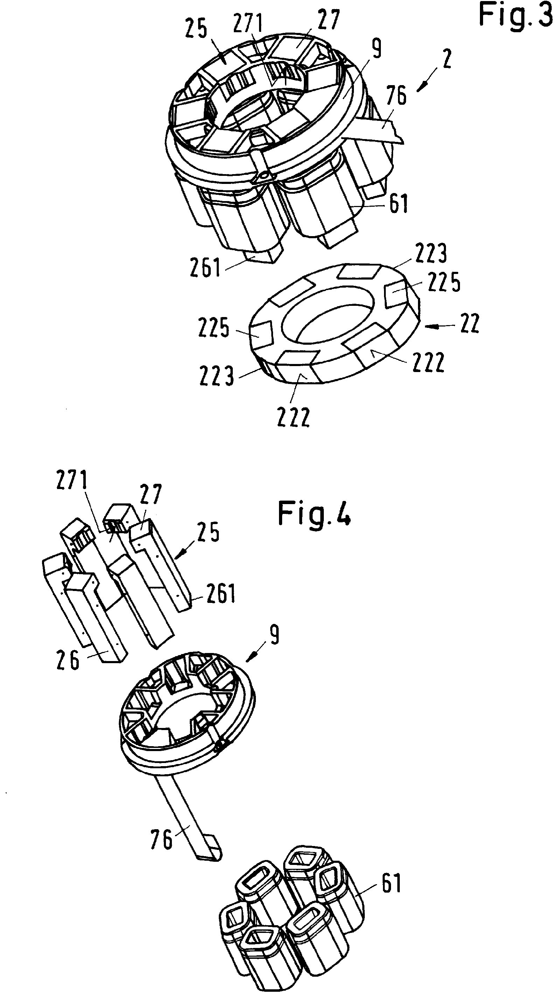

Zum besseren Verständnis zeigen die Fig. 3 und Fig. 4 weitere Darstellungen des Stators 2 des Ausführungsbeispiels der Magnetlagervorrichtung 1, wobei das Gehäuse 10 nicht dargestellt ist. Fig. 3 zeigt eine perspektivische Darstellung des Stators 2 und einer Halteeinrichtung 9, welche noch genauer beschrieben wird. Ferner ist in Fig. 3 ein Rückschluss 22 vorgesehen, welcher alle ersten Enden 261 der Längsschenkel 26 - also die darstellungsgemäss (Fig. 1) unteren Enden 261 - miteinander verbindet und der Führung des magnetischen Flusses dient. Der Rückschluss 22 ist vorzugsweise ringförmig ausgestaltet. Fig. 4 zeigt eine perspektivische Explosionsdarstellung der Spulenkerne 25 mit den darauf angeordneten konzentrierten Wicklungen 61 und der Halteeinrichtung 9.

Das Gehäuse 10 ist vorzugsweise aus einem metallischen Material gefertigt, beispielsweise aus Aluminium oder rostfreiem Stahl. Zur besseren chemischen Resistenz kann das Gehäuse 10 mit einer Beschichtung versehen sein, vorzugsweise mit einer Kunststoffbeschichtung aus einem chemisch hoch resistenten Kunststoff. Beispiele für solche Kunststoffe sind PTFE (Polytetrafluorethylen), PFA (Perfluoralkoxy-Polymere), ECTFE (Ethylenchlortrifluorethylen), ETFE (Ethylen-Tetrafluorethylen), Epoxidharz (Polyepoxid), PPA (Polyphthalamid), PE (Polyethylen). Je nach beabsichtigter Anwendung kann das Gehäuse 10 auch aus Titan oder einem Chromstahl hergestellt sein.

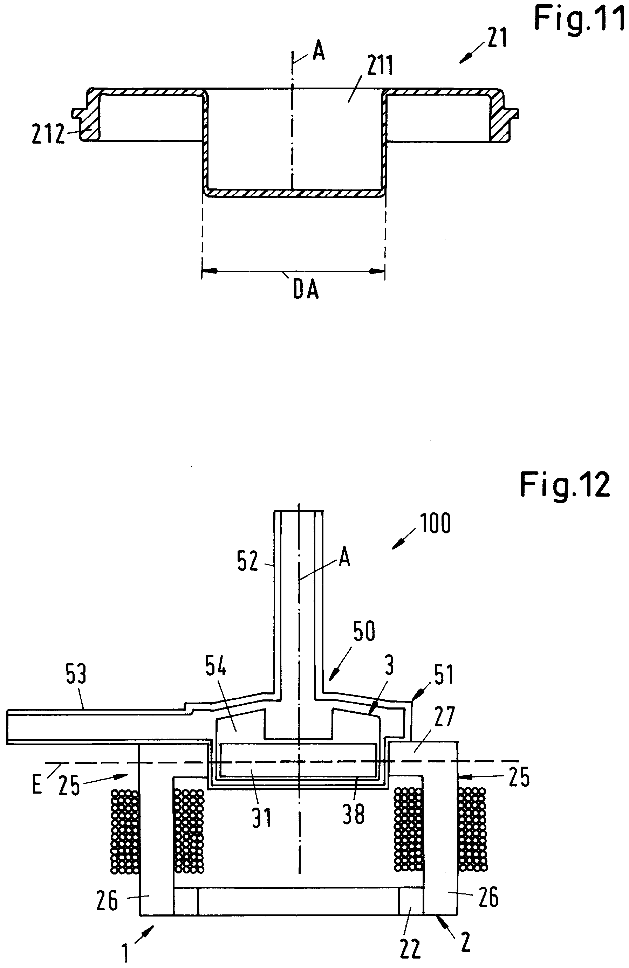

Der Stator 2 umfasst ferner einen Spalttopf 21 mit einer becherförmigen Ausnehmung 211 (siehe auch Fig. 11), in welche der zu lagernde Rotor 3 einsetzbar ist (siehe Fig. 1). Der Spalttopf 21 bildet eines der beiden axialen Enden des Stators 2 bzw. der Magnetlagervorrichtung 1, gemäss der Darstellung in Fig. 1 das obere axiale Ende des Stators 2. An dem anderen axialen Ende der Magnetlagervorrichtung 1 ist ein Gehäusedeckel 11 angeordnet, welcher das Gehäuse 10 verschliesst.

Der Spalttopf 21 ist fest mit dem Gehäuse 10 verbunden, beispielsweise mittels einer formschlüssigen Verbindung und/oder mittels einer elastischen Dichtung 201. Vorzugsweise ist der Spalttopf 21 hermetisch dicht mit dem Gehäuse 10 verbunden. Der Gehäusedeckel 11 ist fest mit dem Gehäuse 10 verbunden, beispielsweise mittels Schrauben 111 (Fig. 1), wobei zwischen dem Gehäusedeckel 11 und dem Gehäuse 10 optional ein Dichtungselement 105 angeordnet ist. Das Dichtungselement 105 kann insbesondere als Flachdichtung ausgestaltet sein. Vorzugsweise ist der Gehäusedeckel 11 hermetisch dicht mit dem Gehäuse 10 verbunden.

Besonders bevorzugt bildet das Gehäuse 10 zusammen mit dem Spalttopf 21 und dem Gehäusedeckel 11 ein hermetisch dichtes Gehäuse, in welchem die anderen Komponenten des Stators 2 hermetisch dicht gekapselt sind. Das Gehäuse 10 ist vorzugsweise mit einer thermisch gut leitenden Vergussmasse, beispielsweise mit einem Epoxidharz, aufgefüllt, sodass die Komponenten, die im Inneren des Gehäuses 10 angeordnet sind, mit der Vergussmasse umgeben sind. Dadurch wird der allgemeine thermische Widerstand reduziert und Vibrationen werden gedämpft.

Der Gehäusedeckel 11 besteht vorzugsweise aus einem Kunststoff. Insbesondere für Anwendungen in chemisch aggressiven Umgebungen ist ein chemisch resistenter Kunststoff wie beispielsweise Polypropylen bevorzugt.

Die Querschenkel 27 der Spulenkerne 25 sind in dem Spalttopf 21 angeordnet, und zwar derart, dass die Stirnflächen 271 der Querschenkel 27 um die becherförmige Ausnehmung 211 herum angeordnet sind.

Die Spulenkerne 25 des Stators 2 sind äquidistant auf einer Kreislinie angeordnet, sodass die Stirnflächen 271 den magnetisch wirksamen Kern 31 des Rotors 3 umgeben, wenn der Rotor 3 in die becherförmige Ausnehmung 211 eingesetzt ist. An jedem Längsschenkel 26 ist jeweils genau eine konzentrierte Wicklungen 61 vorgesehen, welche den Längsschenkel 26 umgibt.

In anderen Ausführungsformen können an den Längsschenkeln 26 auch mehr als eine konzentrierte Wicklung angeordnet sein. Beispielsweise gibt es Ausführungsbeispiele, bei denen an jedem der Längsschenkel 26 jeweils genau zwei konzentrierte Wicklungen vorgesehen sind, von denen jede den jeweiligen Längsschenkel 26 umgibt, wobei die beiden auf dem gleichen Längsschenkel 26 angeordneten Wicklungen bezüglich der axialen Richtung A benachbart zueinander angeordnet sind.

Die konzentrierten Wicklungen 61 dienen dazu, elektromagnetische Felder zu erzeugen, mit welchen der Rotor 3 berührungslos magnetisch in der becherförmigen Ausnehmung 211 des Spalttopfs 21 lagerbar ist.

Ferner ist eine Kontrolleinheit 40 für die Ansteuerung und die Versorgung der Wicklungen 61 mit elektrischer Energie vorgesehen. Die Kontrolleinheit 40 umfasst insbesondere die Leistungselektronik, beispielsweise die Umrichter oder die Gleichrichter, welche die erforderlichen Ströme in die Wicklungen 61 einspeisen. Die Kontrolleinheit 40 ist in Fig. 1 und in Fig. 2 dargestellt. Insbesondere bevorzugt ist die Kontrolleinheit 40 auch innerhalb des Gehäuses 10 angeordnet, beispielsweise darstellungsgemäss (Fig. 1) unterhalb der ersten Enden 261 der Längsschenkel 26 der Spulenkerne 25. Die Kontrolleinheit 40 ist vorzugsweise auch mit einer thermischen Vergussmasse umgossen oder an das Gehäuse 10 und den Rückschluss 22 und/oder sie Spulenkerne 25 des Stators 2 gekoppelt. Bevorzugt umfasst die Kontrolleinheit 40 ein Elektronikboard 41, auf welchem verschiedene elektronische Komponenten 42 angeordnet sind.

Wie dies insbesondere in den Fig. 1 und Fig. 2 zu erkennen ist, umfasst das Gehäuse 10 vorzugsweise zwei voneinander getrennte und bezüglich der axialen Richtung A benachbart angeordnete Bereiche, von denen einer ein Statorgehäuse 101 bildet und der andere ein Kontrollgehäuse 102. Das Statorgehäuse 101 des Gehäuses 10 ist für die Aufnahme der Spulenkerne 25 mit den darauf angeordneten Wicklungen 61 ausgestaltet, und das Kontrollgehäuse 102 ist für die Aufnahme der Kontrolleinheit 40 ausgestaltet.

Entsprechend einer bevorzugten Massnahme umfasst das Gehäuse 10 einen Innenbecher 13, der im Wesentlichen zylindrisch ausgestaltet ist, und der radial innenliegend bezüglich der Wicklungen 61 in dem von den Wicklungen 61 umgebenen Innenraum angeordnet ist. Der Innenbecher 13 ist über einen flanschartigen Vorsprung 14 mit einer äusseren Wandung 15 des Gehäuses 10 verbunden. Die äussere Wandung 15 bildet die radial aussenliegende Begrenzung des Gehäuses 10. Besonders bevorzugt sind der Innenbecher 13 und der flanschartige Vorsprung 14 integraler Bestandteil des Gehäuses 10. Die äussere Wandung 15, der flanschartige Vorsprung 14 und der Innenbecher 13 sind in ihrer Gesamtheit einstückig ausgestaltet und bilden das vorzugsweise einstückige Gehäuse 10.

Der Innenbecher 13 und der flanschartige Vorsprung 14 trennen den Bereich des Gehäuses 10, welcher das Statorgehäuse 101 bildet, von dem Bereich, welcher das Kontrollgehäuse 102 bildet.

Der mit dem flanschartigen Vorsprung 14 verbundene Innenbecher 13 erstreckt sich von dem radial innenliegenden Rand des flanschartigen Vorsprungs 14 in axialer Richtung A und ist radial innenliegend bezüglich der Wicklungen 61 und des Rückschlusses 22 in dem von den Wicklungen 61 umgegebenen Innenraum angeordnet, wie das insbesondere in Fig. 1 zu erkennen ist. Bezüglich der radialen Richtung ist der Innenbecher 13 benachbart zu den Längsschenkeln 26 der Spulenkerne 25 bzw. den darauf angeordneten Wicklungen 61 angeordnet, sodass der Innenbecher 13 die von den Wicklungen 61 und den Spulenkernen 25 generierte Wärme besonders gut aufnehmen und abführen kann. Bezüglich der axialen Richtung A erstreckt sich der Innenbecher 13 etwa bis an die becherförmige Ausnehmung 211 des Spalttopfes 21.

Wie dies insbesondere in Fig. 2 zu erkennen ist, ist das Statorgehäuse 101 des Gehäuses 10 mit einem Innenraum ausgestaltet, der eine im Wesentlichen kreisförmigen oder ringförmige Querschnittsfläche senkrecht zur axialen Richtung A hat. Dies ist bevorzugt, weil das Statorgehäuse 101 dadurch den ringförmigen Rückschluss 22 mit den um den Rückschluss 22 herum angeordneten Spulenkernen 25 besonders gut aufnehmen kann. Das Kontrollgehäuse 102 des Gehäuses 10 ist mit einem Innenraum ausgestaltet, der eine im Wesentlichen rechteckige oder quadratische Querschnittsfläche senkrecht zur axialen Richtung A hat. Dies ist bevorzugt, weil das Kontrollgehäuse 102 dadurch besonders gut geeignet ist, um das vorzugsweise rechteckig oder quadratisch ausgestaltete Elektronikboard 41 der Kontrolleinrichtung 40 aufzunehmen. Eine rechteckige oder quadratische Ausgestaltung des Elektronikboards 41 ist insbesondere bezüglich der Herstellung wesentlich einfacher als beispielsweise eine runde Ausgestaltung.

Aufgrund dieser Ausgestaltung des Statorgehäuses 101 und des Kontrollgehäuses 102 hat das axiale Ende des Stators 2, an welchem der Spalttopf 21 das Gehäuse 10 verschliesst, einen im Wesentlichen runden Querschnitt, sodass der Spalttopf 21 eine runde bzw. kreisringförmige Ausgestaltung aufweist. Dagegen hat das axiale Ende des Stators 2, an welchem der Gehäusedeckel 11 das Gehäuse 10 verschliesst, einen im Wesentlichen rechteckigen oder quadratischen Querschnitt, sodass der Gehäusedeckel 11 eine rechteckige oder quadratische Ausgestaltung aufweist.

Mit beispielhaftem Charakter sind in Fig. 1 einige Komponenten der Kontrolleinheit 40 dargestellt. Die Kontrolleinheit 40 umfasst beispielsweise das Elektronikboard 41, auf dem die elektronische Komponenten 42 vorgesehen sind, z. B. die Leistungselektronik für die Ansteuerung der Wicklungen 61. Das Elektronikboard 41 kann ferner beispielsweise Auswerteelektronik zur Auswertung der Signale von Sensoren, z.B. Magnetfeldsensoren, enthalten und als Kommunikationsinterface dienen. Das Elektronikboard 41 ist vorzugsweise als Elektronikprint bzw. PCB (printed circuit board) ausgestaltet. Ferner ist ein Anschlusskabel 45 vorgesehen, das über einen Kabelanschluss (nicht dargestellt) oder einen Stecker mit dem Elektronikboard 41 verbunden ist. Das Anschlusskabel 45 führt aus dem Gehäuse 10 heraus und dient beispielsweise der Energieversorgung der Magnetlagervorrichtung 1. Das Anschlusskabel 45 wird mittels einer dichtend ausgestalteten Kabeldurchführung 47 aus dem Gehäuse 20 herausgeführt. Vorzugsweise ist die Kabeldurchführung 47 hermetisch dichtend ausgestaltet.

Das Elektronikboard 41 der Kontrolleinrichtung 40 ist über Verbindungsleitungen (nicht dargestellt), beispielsweise Kabel, mit den Wicklungen 61 verbunden, um diese anzusteuern und mit Energie zu versorgen. Es versteht sich, dass zwischen dem Kontrollgehäuse 102 und dem Statorgehäuse 101 Durchführungen oder Öffnungen vorgesehen sind, durch welche die Verbindungsleitungen hindurchgeführt werden. Solche Durchführungen können beispielsweise in dem flanschartigen Vorsprung 14 oder in dem Innenbecher 13 angeordnet sein.

Das Elektronikboard 41 ist vorzugsweise unmittelbar auf dem flanschartigen Vorsprung 14 angeordnet, sodass das Elektronikboard an dem flanschartigen Vorsprung 14 anliegt. Hierdurch ist es in besonders effizienter Weise möglich, die in der Kontrolleinheit 40 generierte Wärme über das Gehäuse 10 abzuführen. Bevorzugt sind die Hauptwärmequellen in der Kontrolleinheit 40, beispielsweise die Leistungsschalter für die Wicklungen 61, in den Bereichen des Elektronikboards 41 angeordnet, die an dem flanschartigen Vorsprung 14 anliegen.

Der Innenraum des Innenbechers 13, also der von dem Innenbecher 13 umschlossene Raum, kann für weitere elektronische Komponenten, Elektronikboards oder Stecker oder Verbindungen genutzt werden. Diese sind in Fig. 1 aus Gründen der besseren Übersicht nicht dargestellt.

Gemäss einer speziell bevorzugten Ausgestaltung ist der Stator 2 so ausgestaltet, dass er zusätzlich zur berührungslos magnetischen Lagerung des Rotors 3 auch ein Drehmoment auf den Rotor 3 bzw. den magnetisch wirksamen Kern 31 des Rotors 3 ausüben kann, welches den Rotor 3 zu einer Rotation um eine Solldrehachse antreibt. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet, so wie dies in Fig. 1 dargestellt ist. Diese Solldrehachse erstreckt sich in der axialen Richtung A, das heisst, bei dieser bevorzugten Ausgestaltung ist der in dem Spalttopf 21 des Stators 2 angeordnete Rotor 3 zur Rotation um die axiale Richtung A antreibbar. Üblicherweise stimmt die Solldrehachse mit der Mittelachse des Stators 2 überein, welche sich in der axialen Richtung A erstreckt.

Bei dieser Ausgestaltung erzeugen die konzentrierten Wicklungen 61 also elektromagnetische Drehfelder, mit denen der Rotor 3 sowohl berührungslos magnetisch bezüglich des Stators 2 lagerbar ist als auch berührungslos zur Rotation um die axiale Richtung A antreibbar ist.

Es versteht sich, dass die Anzahl von sechs Spulenkernen 25 zwar bevorzugt, aber nur beispielhaft zu verstehen ist. Es sind natürlich auch solche Ausgestaltungen möglich, bei denen der Stator 2 weniger als sechs, z. B. fünf oder vier oder drei Spulenkerne 25 aufweist, oder solche Ausgestaltungen, bei denen der Stator 2 mehr als sechs, z. B. sieben oder acht oder neun Spulenkerne 25 aufweist oder eine beliebige grössere Anzahl von Spulenkernen 25.

Der Rotor 3 umfasst den magnetisch wirksamen Kern 31, welcher ring- oder scheibenförmig ausgestaltet ist. Der magnetisch wirksame Kern 31 ist gemäss der Darstellung in Fig. 1 als Ring ausgestaltet und definiert eine magnetische Mittelebene. Alternativ kann der magnetisch wirksame Kern 31 auch als Scheibe ausgestaltet sein. In der Regel ist bei einem scheibenförmigen oder ringförmigen magnetisch wirksamen Kern 31 die magnetische Mittelebene die geometrische Mittelebene des magnetisch wirksamen Kerns 31 des Rotors 3, die senkrecht zur axialen Richtung A liegt. Im Betriebszustand ist der magnetisch wirksame Kern 31 in einer radialen Ebene E gelagert, welche senkrecht auf der axialen Richtung A steht. Die radiale Ebene ist in Fig. 1 durch die Linie E angedeutet, die senkrecht auf der axialen Richtung A steht. Die radiale Ebene E ist also diejenige Ebene, welche senkrecht auf der axialen Richtung A steht und die Linie E enthält.

Die radiale Ebene E ist diejenige Ebene, in welcher der magnetisch wirksame Kern 31 des Rotors 3 im Betriebszustand zwischen den Stirnflächen 271 im Stator 2 aktiv magnetisch gelagert ist. Wenn der Rotor 3 nicht verkippt und in axialer Richtung A nicht ausgelenkt ist, liegt die magnetische Mittelebene in der radialen Ebene E. Die radiale Ebene E definiert die x-y-Ebene eines kartesischen Koordinatensystems, dessen z-Achse in axialer Richtung A verläuft.

Mit der radialen Position des magnetisch wirksamen Kerns 31 bzw. des Rotors 3 wird die Lage des Rotors 3 in der radialen Ebene E bezeichnet.

Da es für das Verständnis der Erfindung ausreichend ist, ist in der Zeichnung in der Fig. 1 von dem Rotor 3 nur der magnetisch wirksame Kern 31 dargestellt. Es versteht sich, dass der Rotor 3 natürlich auch noch weitere Komponenten umfassen kann wie beispielsweise Ummantelungen oder Kapselungen, die vorzugsweise aus einem Kunststoff hergestellt sind, oder aus einem Metall oder aus einer Metalllegierung oder aus einer Keramik bzw. einem keramischen Werkstoff. Ferner kann der Rotor 3 auch Flügel zum Mischen, Rühren oder Pumpen von Fluiden (siehe z. B. Fig. 12) oder sonstige Komponenten umfassen.

Wenn der Rotor 3 in die becherförmige Ausnehmung 211 des Spalttopfes 21 eingesetzt ist, wird der Rotor 3 und insbesondere der magnetisch wirksame Kern 31 des Rotors 3 von den radial aussenliegend angeordneten Stirnflächen 271 der Querschenkeln 27 der Spulenkerne 25 des Stators 2 umgeben. Die Querschenkel 27 bilden somit eine Mehrzahl von ausgeprägten Statorpolen- hier sechs Statorpole. Die Querschenkel 27 sind an den oberen Enden der Längsschenkel 26 und in der radialen Ebene E angeordnet. Jeder Querschenkel 27 erstreckt sich in der radialen Richtung auf den Rotor 3 zu.

Wenn sich der magnetisch wirksame Kern 31 des Rotors 3 während des Betriebs in seiner Soll-Position befindet, so ist der magnetisch wirksame Kern 31 zwischen den Stirnflächen 271 der Querschenkel 27 zentriert, sodass die in der radialen Ebene E angeordneten Querschenkel 27 auch in der magnetischen Mittelebene liegen. Die konzentrierten Wicklungen 61 sind darstellungsgemäss unterhalb der radialen Ebene E angeordnet und so ausgerichtet, dass ihre Spulenachsen in axialer Richtung A verlaufen.

Alle ersten Enden 261 der Längsschenkel 26 - also die darstellungsgemäss (Fig. 1) unteren Enden 261 - sind durch den Rückschluss 22 (siehe auch Fig. 3) miteinander verbunden. Der Rückschluss 22 ist vorzugsweise ringförmig ausgestaltet. Dabei sind solche Ausgestaltungen möglich (siehe z. B. Fig. 1), bei welchen sich der Rückschluss 22 radial innenliegend entlang aller ersten Enden 261 der Längsschenkel 26 erstreckt.

Um die für die magnetische Lagerung des Rotors 3 und optional zur Erzeugung eines Drehmoments auf den Rotor 3 notwendigen elektromagnetischen Felder zu erzeugen, tragen die Längsschenkel 26 der Spulenkerne 25 die als konzentrierte Wicklungen 61 ausgestalteten Wicklungen.

Mit diesen konzentrierten Wicklungen 61 werden im Betriebszustand diejenigen elektromagnetischen Drehfelder erzeugt, mit welchen eine beliebig einstellbare Querkraft in radialer Richtung auf den Rotor 3 ausübbar ist, sodass die radiale Position des Rotors 3, also seine Position in der zur axialen Richtung A senkrechten radialen Ebene E, aktiv steuerbar bzw. regelbar ist. Optional wird mit diesen elektromagnetischen Drehfeldern zusätzlich ein Drehmoment auf den Rotor 3 bewirkt.

Mit dem "magnetisch wirksamen Kern 31" des Rotors 3 ist derjenige Bereich des Rotors 3 gemeint, welcher für die Erzeugung der magnetischen Lagerkräfte und optional für die Drehmomentbildung magnetisch mit dem Stator 2 zusammenwirkt.

Wie bereits erwähnt, ist der magnetisch wirksame Kern 31 bei diesem Ausführungsbeispiel ringförmig ausgestaltet. Ferner ist der magnetisch wirksame Kern 31 permanentmagnetisch ausgestaltet. Dazu kann der magnetisch wirksame Kern 31 mindestens einen Permanentmagneten, aber auch mehrere Permanentmagnete umfassen oder - wie im hier beschriebenen Ausführungsbeispiel - vollständig aus einem permanentmagnetischen Material bestehen, sodass der magnetisch wirksame Kern 31 der Permanentmagnet ist. Der magnetisch wirksame Kern 31 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Es sind auch solche Ausgestaltungen möglich, bei denen der magnetisch wirksame Kern 31 permanentmagnetfrei, also ohne Permanentmagnete ausgestaltet ist. Der Rotor 3 ist dann z.B. als Reluktanzläufer ausgestaltet. Der magnetisch wirksame Kern 31 des Rotors 3 besteht dann beispielsweise aus einem weichmagnetischen Material. Geeignete weichmagnetische Materialien für den magnetisch wirksamen Kern 31 sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 31 des Rotors 3 sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Auch sind Ausgestaltungen möglich, bei denen der Rotor nach dem Prinzip eines Käfigläufers ausgestaltet ist.

Sowohl der ringförmige Rückschluss 22 als auch die Spulenkerne 25 des Stators 2 sind jeweils aus einem weichmagnetischen Material gefertigt, weil sie als Flussleitelemente zur Führung des magnetischen Flusses dienen.

Geeignete weichmagnetische Materialien für die Spulenkerne 25 und den Rückschluss 22 sind beispielsweise ferromagnetische oder ferrimagnetische Materialien, also insbesondere Eisen, Nickel-Eisen, Kobalt-Eisen Silizium-Eisen oder Mu-Metall. Hierbei ist für den Stator 2 eine Ausgestaltung als Statorblechpaket bevorzugt, bei welcher die Spulenkerne 25 und der Rückschluss 22, geblecht ausgestaltet sind, das heisst sie bestehen aus mehreren dünnen Blechelementen, die gestapelt sind.

Ferner ist es möglich, dass die Spulenkerne 25 und der Rückschluss 22 aus gepressten und anschliessend gesinterten Körnern der genannten Materialien bestehen. Die metallischen Körner sind dabei vorzugsweise in eine Kunststoffmatrix eingebettet, sodass sie zumindest teilweise gegeneinander isoliert sind, wodurch sich Wirbelstromverluste minimieren lassen. Es sind also für den Stator auch weichmagnetische Verbundwerkstoffe geeignet, welche aus elektrisch isolierten und zusammengepressten Metallpartikeln bestehen. Insbesondere können diese weichmagnetischen Verbundwerkstoffe, die auch als SMC (Soft Magnetic Composites) bezeichnet werden, aus Eisenpulverpartikeln bestehen, die mit einer elektrisch isolierenden Schicht beschichtet sind. Diese SMC werden dann mittels pulvermetallurgischer Verfahren zu der gewünschten Ausgestaltung geformt.

Während des Betriebs der Magnetlagervorrichtung 1 wirkt der magnetisch wirksame Kern 31 des Rotors 3 mit dem Stator 2 zusammen, derart, dass der Rotor 3 berührungslos magnetisch bezüglich des Stators 2 lagerbar ist, und vorzugsweise zusätzlich berührungslos magnetisch in Rotation um die axiale Richtung A versetzt werden kann. Dabei ist es besonders vorteilhaft, dass dieselben Wicklungen 61 mit denen die magnetische Lagerung des Rotors 3 bewirkt wird, auch zur Erzeugung eines Drehmoments auf den Rotor 3 dienen. Vorzugsweise sind dann drei Freiheitsgrade des Rotors 3, nämlich seine Position in der radialen Ebene E und seine Rotation, aktiv regelbar. Bezüglich seiner axialen Auslenkung aus der radialen Ebene E in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene E ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Spulenkernen 25 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist, bezeichnet auch im Rahmen dieser Anmeldung eine aktive magnetische Lagerung eine solche, die aktiv steuer- bzw. regelbar ist, beispielsweise über die mit den konzentrierten Wicklungen 61 generierten elektromagnetischen Felder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Soll-Position, also z. B. bei einer Verschiebung oder Auslenkung in axialer Richtung A oder bei einer Verkippung, wieder in seine Soll-Position bringen.

Bei der Magnetlagervorrichtung 1 wird im Unterschied zu klassischen Magnetlagern die magnetische Lagerung - und optional die Generierung eines auf den Rotor wirkenden Drehmoments - über elektromagnetische Drehfelder realisiert. Zur kombinierten Erzeugung der magnetischen Lagerkräfte und eines Drehmoments zum Rotieren des Rotors 3 um die axiale Richtung A ist es einerseits möglich - wie in Fig 1 gezeigt-, an jedem Längsschenkel 26 genau eine konzentrierte Wicklung 61 anzuordnen.

Andererseits sind auch Ausgestaltungen möglich, bei denen zur kombinierten Erzeugung der magnetischen Lagerkräfte und eines Drehmoments zum Rotieren des Rotors 3 zwei unterschiedliche Wicklungssysteme vorgesehen sind. Dazu sind dann beispielsweise an jedem Längsschenkel jeweils genau zwei konzentrierte Wicklungen angeordnet, die bezüglich der axialen Richtung A benachbart zueinander angeordnet sind. Eine dieser beiden Wicklungen gehört zu dem ersten der beiden Wicklungssystem und die andere zu dem zweiten der beiden Wicklungssysteme.

Bei der in Fig. 1 dargestellten Ausführungsform mit genau einer konzentrierten Wicklung 61 an jedem Spulenkern 25 werden beispielsweise die in der Kontrolleinheit 40 jeweils ermittelten Werte für den für die Lagerung benötigten Strom und den für die Erzeugung des Drehmoments benötigten Strom rechnerisch -also z. B. mit Hilfe von Software - addiert bzw. überlagert. Der sich daraus ergebende Gesamtstrom wird dann in die jeweilige konzentrierte Wicklung 61 eingeprägt.

In Fig. 3 ist zum besseren Verständnis der Rückschluss 22 getrennt von den Spulenkernen 25 dargestellt. Der Rückschluss 22 ist im Wesentlichen ringförmig ausgestaltet und erstreckt sich im zusammengesetzten Zustand (siehe auch Fig. 1) radial innenliegend entlang der ersten Enden 261 der Längsschenkel 26. Vorzugsweise ist der Rückschluss 22 geblecht ausgestaltet. Bei der geblechten Ausgestaltung ist der Rückschluss 22 aus einer Mehrzahl von dünnen Elementen aufgebaut, die parallel zueinander in axialer Richtung A aufeinander gestapelt sind. Alle Elemente sind identisch ausgestaltet, hier also jeweils im Wesentlichen ringförmig und auch mit der gleichen Dicke.

Der Rückschluss 22 weist an seiner radial äusseren Umfangsfläche eine Mehrzahl von Abflachungen 222 auf, die planar, also nicht gekrümmt ausgestaltet sind. An jeder dieser Abflachungen 222 liegt im zusammengesetzten Zustand des Stators 2 jeweils ein erstes Ende 261 eines der Längsschenkel 26 an, die vorzugsweise ein rechteckiges Profil aufweisen. Durch die planare Ausgestaltung der Abflachungen 222 wird eine grosse Kontaktfläche zwischen dem Rückschluss 22 und den Längsschenkeln 26 der Spulenkerne 25 gewährleistet, woraus eine besonders gute Führung des magnetischen Flusses bzw. ein sehr geringer magnetischer Widerstand an dem Übergang zwischen dem Rückschluss 22 und den Längsschenkeln 26 resultiert. Die Abflachungen können auch an separaten Segmenten 225 angeordnet sein, wobei die separaten Segmente 225 in Nuten des Rückschlusses 22 angeordnet sind. Die Nuten sind so bemessen, dass die separaten Segmente 225 bündig mit dem Rest des Rückschlusses 22 abschliessen.

Vorzugsweise ist die Anzahl der Abflachungen 222 gleich gross wie die Anzahl der Spulenkerne 25, hier sind also sechs Abflachungen 222 vorgesehen, die äquidistant entlang des äusseren Umfangs des Rückschlusses 22 verteilt sind

Ferner können an dem Rückschluss 22 ein oder mehrere Entlüftungsbohrungen oder - ausnehmungen 223 vorgesehen sein, die sich bezüglich der axialen Richtung A vollständig durch den Rückschluss 22 hindurch erstrecken. Durch die Entlüftungsausnehmungen 223 kann beispielsweise beim Ausgiessen des Gehäuses 20 mit einer thermisch leitenden Vergussmasse Luft entweichen.

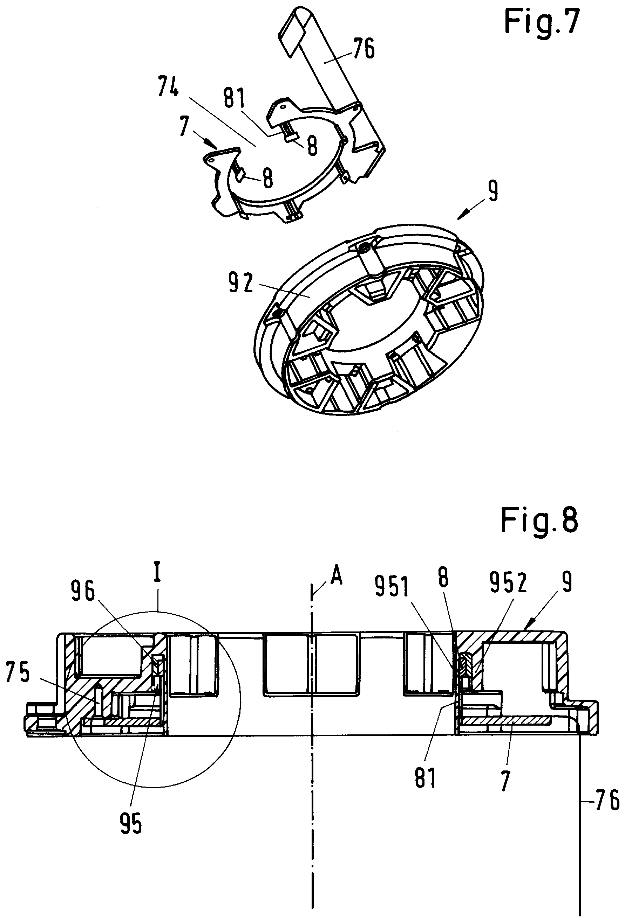

Um die jeweils aktuelle Position des Rotors 3 in der becherförmigen Ausnehmung 211 zu bestimmen, umfasst die Magnetlagervorrichtung 1 eine Mehrzahl - hier sechs - Magnetfeldsensoren 8 (siehe auch Fig. 7), welche im zusammengebauten Zustand der Magnetlagervorrichtung 1 um die becherförmige Ausnehmung 211 herum angeordnet sind. Die Magnetfeldsensoren 8 sind Sensoren, mit denen ein Magnetfeld gemessen werden kann. Insbesondere sind als Magnetfeldsensoren 8 folgende Sensorarten geeignet: Hall-Sensoren oder magnetoresistive Sensoren oder GMR Sensoren (GMR: giant magnetoresistance). Mit Hilfe der Magnetfeldsensoren 8 kann die aktuelle Position des Rotors 3 in der becherförmigen Ausnehmung 211 des Spalttopfs 21 bzw. in der radialen Ebenen E in an sich bekannter Weise ermittelt werden.

Gemäss einer besonders bevorzugten Ausgestaltung, die in Fig. 7 dargestellt ist, sind alle Magnetfeldsensoren 8 auf einer Platine 7 angeordnet und mit dieser über elektrische Verbindungen 81 signalverbunden, sodass alle Magnetfeldsensoren 8 über die Platine 7 angesteuert werden können und die von den Magnetfeldsensoren 8 gemessenen Signale über die Platine 7 empfangen und verarbeitet oder beispielsweise an die Kontrolleinrichtung 40 übermittelt werden können.

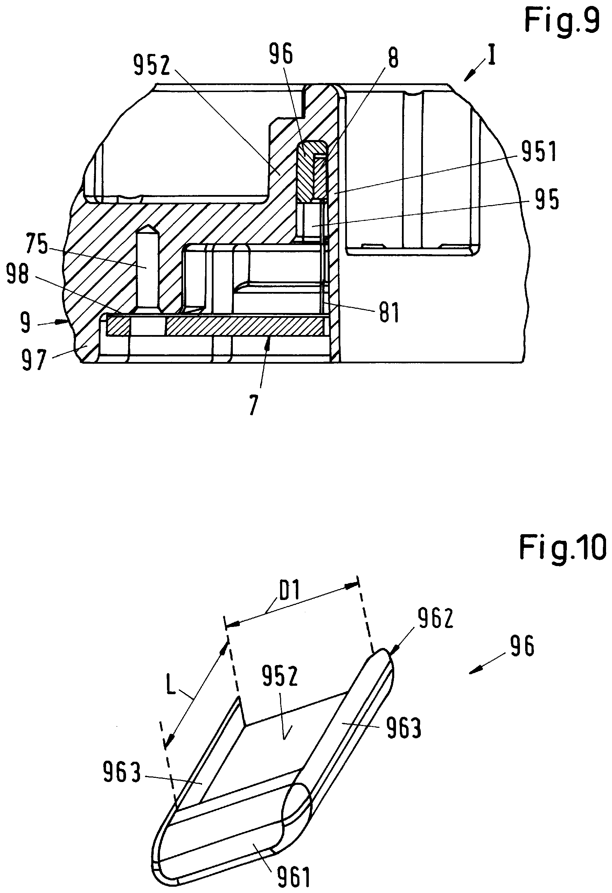

Die Platine 7 ist bezüglich der axialen Richtung A zwischen den Wicklungen 61 einerseits und den Querschenkel 27 andererseits angeordnet. Die in Fig. 7 ebenfalls dargestellte Halteeinrichtung 9 ist zum Aufnehmen der Platine 7 ausgestaltet. Vorzugsweise kann die Platine 7 an der Halteeinrichtung 9 befestigt werden, beispielsweise mittels einer Mehrzahl von Schrauben 75 (siehe Fig. 9).

Die Platine 7 ist vorzugsweise als Elektronikprint bzw. PCB (printed circuit board) ausgestaltet. Auf der Platine 7 sind die Magnetfeldsensoren 8 bzw. die elektrischen Verbindungen 81 befestigt, beispielsweise mittels einer Lötverbindung. Auf der Platine 7 können ferner solche Komponenten vorgesehen sein, die für die Ansteuerung der Magnetfeldsensoren und/oder für die Auswertung der von den Magnetfeldsensoren 8 ermittelten Messsignale verwendet werden.

Die Platine 7 ist im Wesentlichen ringförmig ausgestaltet und parallel zur radialen Ebene E angeordnet. Wie das in Fig. 7 zu erkennen ist, ist die Platine 7 nicht als geschlossener Ring ausgestaltet, sondern mit einer ringsegmentförmigen Öffnung 74, sodass die Platine 7 in Umfangsrichtung gesehen zwei Enden hat. Vorzugsweise ist die Platine 7 radial innenliegend bezüglich der Längsschenkel 26 der Spulenkerne 25 angeordnet, und zwar derart, dass die Magnetfeldsensoren 8 um die becherförmige Ausnehmung 211 des Spalttopfes 21 herum angeordnet sind. Besonders bevorzugt sind die Magnetfeldsensoren 8 bezüglich der Umfangsrichtung äquidistant auf der Platine 7 angeordnet.

Die Platine 7 umfasst ferner ein elektrisches Verbindungselement 76, welches die Platine 7 mit der Kontrolleinrichtung 40 verbindet, sodass die Kontrolleinrichtung 40 und die Platine 7 über das elektrische Verbindungselement 76 elektrische Spannungen oder Ströme austauschen können. Das elektrische Verbindungselement 76 ist vorzugsweise als Flexprint ausgestaltet. Natürlich kann das elektrische Verbindungselement 76 auch anders ausgestaltet sein, beispielsweise als Kabel, als Kabelbündel oder als Flachbandkabel.

Wie bereits erwähnt, umfasst die Magnetlagervorrichtung 1 ferner die Halteeinrichtung 9. Die Halteinrichtung 9 dient einer besonders einfachen und trotzdem präzise Montage der Magnetlagervorrichtung 1 und einer sehr genauen Positionierung der Magnetfeldsensoren 8 relativ zu der becherförmigen Ausnehmung 211, in welcher im Betriebszustand der Rotor 3 angeordnet ist.

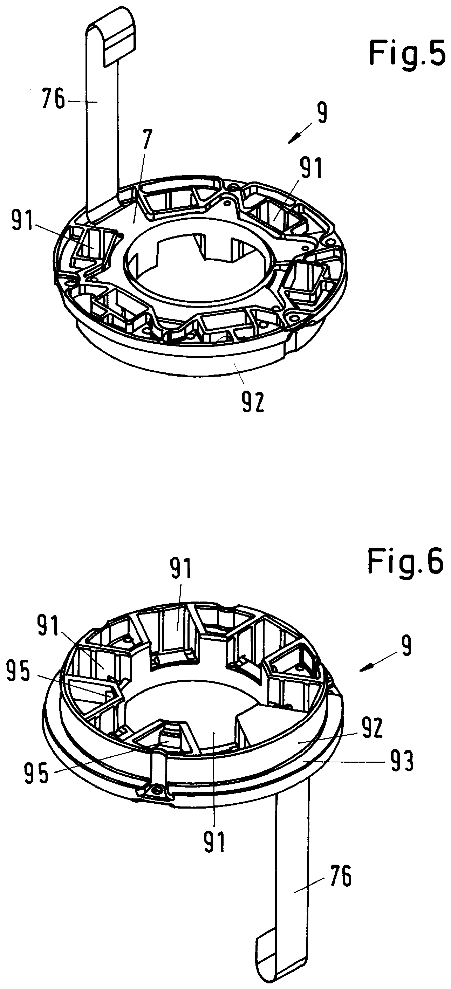

Im Folgenden wird die Halteeinrichtung 9 anhand mehrerer Figuren erläutert. Fig. 5 zeigt die Halteinrichtung 9 in einer perspektivischen Darstellung, wobei die Blickrichtung aus Richtung der ersten Enden 261 der Längsschenkel 26 ist. Gemäss der Darstellung in Fig. 1 ist also der Blick von unten auf die Halteeinrichtung 9 gerichtet. Fig. 6 zeigt die Halteinrichtung 9 in einer perspektivischen Darstellung, wobei die Blickrichtung entgegengesetzt zu der Blickrichtung in Fig. 5 ist. Gemäss der Darstellung in Fig. 1 ist also der Blick in Fig. 6 von oben auf die Halteeinrichtung 9 gerichtet. Sowohl Fig. 5 als auch Fig. 6 zeigen die Halteeinrichtung 9 mit der in der Halteeinrichtung 9 angeordneten Platine 7. Fig. 8 zeigt eine Schnittdarstellung der Halteeinrichtung 9 mit der darin eingelegten Platine 7. Zum besseren Verständnis zeigt Fig. 9 noch eine vergrösserte Darstellung des Details I aus Fig. 8.

Die Halteeinrichtung 9 ist im Wesentlichen plattenförmig und ringförmig ausgestaltet, und umfasst mehrere Aussparungen 91 zum Aufnehmen der Querschenkel 27 der Spulenkerne 25. Für jeden Querschenkel 27 ist genau eine Aussparung 91 vorgesehen, so dass die Anzahl der Aussparungen 91 gleich gross ist wie die Anzahl der Spulenkerne 25. Die Halteeinrichtung 9 wird in den Spalttopf 21 eingesetzt (siehe Fig. 1) und erstreckt sich vom Boden des Spalttopfes 21 in axialer Richtung A bis zu einem darstellungsgemäss (Fig. 1) unteren Rand, der bezüglich der axialen Richtung A darstellungsgemäss oberhalb der Wicklungen 61 angeordnet ist.

Die Halteeinrichtung 9 ist derart ringförmig ausgestaltet, dass sie um die becherförmige Ausnehmung 211 des Spalttopfes 21 herum angeordnet werden kann, dass also die becherförmige Ausnehmung 211 von der Halteeinrichtung 9 radial aussenliegend umschlossen wird.

Die Halteeinrichtung 9 weist einen axialen Randbereich 92 auf, der einen Aussendurchmesser hat, welcher kleiner ist als der Durchmesser des Rests der Halteeinrichtung 9. Gemäss der Darstellung in Fig. 6 ist dieser axiale Randbereich 92 der obere axiale Randbereich. Der axiale Randbereich 92 endet bezüglich der axialen Richtung A an einem Vorsprung 93, an welchem sich der Aussendurchmesser der zweiten Halteeinrichtung 9 vergrössert. Die Ausgestaltung mit dem axialen Randbereich 92 kleineren Durchmessers und dem Vorsprung 93 dient dazu, dass der Spalttopf 21 die Halteeinrichtung 9 radial aussenliegend umschliessen kann. Dies ist insbesondere in Fig. 1 zu erkennen. Der Spalttopf 21 hat einen radial aussenliegenden Rand 212, welcher im zusammengebauten Zustand den axialen Randbereich 92 der zweiten Halteeinrichtung 9 umgreift. Dabei ist der radial aussenliegende Rand 212 bezüglich der axialen Richtung A so lang ausgestaltet, dass er sich höchstens bis auf den Vorsprung 93 erstreckt.

Die Halteeinrichtung 9 ist vorzugsweise aus einem Kunststoff hergestellt und insbesondere bevorzugt aus einem Kunststoff, der mittels Spritzgiessens verarbeitet werden kann. Die Halteeinrichtung 9 ist somit vorzugsweise als ein Spritzgussteil ausgestaltet. Geeignete Kunststoffe für die Herstellung der Halteeinrichtung 9 sind beispielsweise Acrylnitril-Butadien-Styrol (ABS), Polyamid (Nylon, PA), Polypropylen (PP), oder fasergefülltes Polypropylen.

Die Halteeinrichtung 9 dient sowohl als Halterung für die Platine 7 als auch als Halterung für die Magnetfeldsensoren 8, mit welcher die Magnetfeldsensoren 8 sehr genau relativ zu der becherförmigen Ausnehmung 211 platziert werden können. Dazu ist in der Halteeinrichtung 9 für jeden Magnetfeldsensor 8 jeweils eine Kavität 95 vorgesehen, die bezüglich der radialen Richtung von einer innenliegenden Wand 951 und von einer aussenliegenden Wand 952 begrenzt wird, wobei der Magnetfeldsensor 8 in die Kavität 95 einschiebbar ist, und wobei die Kavität 95 so dimensioniert ist, dass die innenliegende Wand 951 und die aussenliegende Wand 952 flächig an dem Magnetfeldsensor 8 anliegen. Dies ist am besten in Fig. 9 zu erkennen.

Ein wesentlicher Aspekt ist dabei, dass sowohl die innenliegende Wand 951 als auch die aussenliegende Wand 952 der Kavität 95 flächig an dem Magnetfeldsensor 8 anliegen, denn dadurch ist die Position des Magnetfeldsensors 8 relativ zu der becherförmigen Ausnehmung 211mit sehr hoher Genauigkeit bekannt. Die Magnetfeldsensoren 8 sind vorzugsweise rechteckig ausgestaltet. Die Kavität 95 ist so bemessen, dass der Magnetfeldsensor 8 bezüglich der axialen Richtung A vollständig in die Kavität 95 eingeführt werden kann. Die Kavität 95 bildet also eine Tasche für den Magnetfeldsensor 8, die bezüglich der axialen Richtung A mindestens so tief ist wie die Erstreckung des Magnetfeldsensors 8 in axialer Richtung A. Die Breite dieser Tasche in radialer Richtung, also der in radialer Richtung gemessene Abstand der innenliegenden Wand 951 von der aussenliegenden Wand 952, ist so bemessen, dass er der Erstreckung des Magnetfeldsensors 8 in radialer Richtung entspricht, sodass der Magnetfeldsensor 8 in axialer Richtung in die Kavität 95 hineingeschoben werden kann und dann die innenliegende Wand 951 sowie die aussenliegende Wand 952 der Kavität 95 flächig an dem Magnetfeldsensor 8 anliegen.

Durch diese Ausgestaltung, bei welcher der Magnetfeldsensor 8 an drei Seiten von der Kavität 95 umschlossen ist, ist zum einen die Position des Magnetfeldsensors 8 mit sehr hoher Genauigkeit bekannt, und zum anderen ist der in der Kavität 95 angeordnete Magnetfeldsensor 8 auch sehr gut geschützt.

Um bei der Montage das Einführen der Magnetfeldsensoren 8 in die Kavitäten 95 zu erleichtern, kann es vorteilhaft sein, die innenliegende Wand 951 und/oder die aussenliegende Wand 952 leicht schräg zur axialen Richtung auszugestalten, sodass die Kavität 95 in axialer Richtung A gesehen leicht konisch ausgestaltet ist, wobei sich die Kavität 95 bezüglich der Darstellung in Fig. 9 nach oben hin verjüngt.

Ferner ist es bevorzugt, dass jeder Magnetfeldsensor 8 möglichst nahe an der becherförmigen Ausnehmung 211 angeordnet ist. Dazu ist der Innendurchmesser der Halteeinrichtung 9 so bemessen, dass er gleich gross oder nur sehr wenig grösser ist als der Aussendurchmesser DA (Fig. 11) der becherförmigen Ausnehmung 211 des Spalttopfes 21. Im zusammengebauten Zustand liegt dann die Wandung der Halteeinrichtung 9, welche die innenliegenden Wände 951 der Kavitäten 95 bildet, an der becherförmigen Ausnehmung 211 des Spalttopfes 21 an. In radialer Richtung gesehen ist also jeweils die innenliegende Wand 951, welche die Kavität 95 begrenzt, zwischen der becherförmigen Ausnehmung 211 des Spalttopfes 21 und dem Magnetfeldsensor 8 angeordnet.

Da die Magnetfeldsensoren 8 bezüglich der Umfangsrichtung vorzugsweise äquidistant auf der Platine 7 angeordnet sind, sind auch die sechs Kavitäten 95 für die sechs Magnetfeldsensoren 8 vorzugsweise äquidistant bezüglich der Umfangsrichtung der Halteeinrichtung 9 angeordnet. Besonders bevorzugt ist jeweils zwischen zwei in Umfangsrichtung benachbarten Aussparungen 91 genau eine Kavität 95 angeordnet. Im zusammengesetzten Zustand ist dann jeder Magnetfeldsensor 8 jeweils zwischen zwei in Umfangsrichtung benachbarten Spulenkernen 25 angeordnet.

Im Hinblick auf eine möglichst hohe Genauigkeit der Position der Magnetfeldsensoren 8 relativ zu der becherförmigen Ausnehmung 211 ist es eine bevorzugte Massnahme, für jede Kavität 95 jeweils ein separates Führungselement 96 vorzusehen, welches die innenliegende Wand 951 oder die aussenliegende Wand 952 bildet, durch welche die Kavität 95 begrenzt wird.

In Fig. 9 ist eine Ausführungsform gezeigt, bei welcher das Führungselement 96 die aussenliegende Wand 952 der Kavität 95 bildet. Zum besseren Verständnis zeigt Fig. 10 noch eine perspektivische Darstellung des separaten Führungselements 96 aus Fig. 9. Da für jede Kavität 95 ein solches separates Führungselement 96 vorgesehen ist, gibt es bei dieser Ausführungsform also sechs solcher Führungselemente 96. Die separaten Führungselemente 96 sind separate, d.h. von der Halteeinrichtung 9 getrennte Komponenten, die erst nach Fertigung der Halteeinrichtung 9 in die Halteeinrichtung 9 eingeschoben werden, um somit die Kavitäten 95 für die Magnetfeldsensoren 8 zu bilden. Da die Führungselemente 96 separate Komponenten sind, können sie mit sehr hoher Präzision gefertigt werden, was vorteilhaft für die Genauigkeit der Position der Magnetfeldsensoren 8 ist. Zudem ist es durch die separaten Führungselemente 96 besonders einfach, die Abmessungen der Kavität 95 an die jeweiligen Magnetfeldsensoren 8 anzupassen.

Wie dies am besten in Fig. 9 zu erkennen ist, hat jedes separate Führungselement 96 ein L-förmiges Profil. Das separate Führungselement 96 hat einen Boden 961 (Fig. 10), welcher den kurzen Schenkel des L bildet, und eine Seitenwand 962, welche den langen Schenkel des L bildet. Der Boden 961 des Führungselements 96 bildet auch den Boden der Kavität 95. Die Seitenwand 962 des Führungselements 96 bildet die aussenliegende Wand 952, welche die Kavität 95 begrenzt. Die Seitenwand 962 umfasst zwei parallele Führungen 963, zwischen denen der Magnetfeldsensor 8 eingeschoben wird, wenn das Führungselement 96 in die Halteeinrichtung 9 eingesetzt ist. Die beiden parallelen Führungen 963 haben einen Abstand D1 voneinander, welcher der entsprechenden Erstreckung des Magnetfeldsensors 8 entspricht, sodass der Magnetfeldsensor 8 zwischen den beiden Führungen 963 eingeschoben werden kann und dabei von den Führungen 963 geführt wird. Die beiden Führungen 963 haben eine Länge L, welche im eingesetzten Zustand die Erstreckung der Führungen 963 in der axialen Richtung ist. Die Länge L ist so bemessen, dass sie mindestens so gross ist wie die entsprechende Abmessung des Magnetfeldsensors 8, sodass der Magnetfeldsensor 8 bezüglich der axialen Richtung A nicht über das Führungselement 96 hinausragt.

Wie bereits erwähnt, ist die Halteeinrichtung 9 bei dem hier beschriebenen Ausführungsbeispiel derart ausgestaltet, dass sie die Platine 7 mit den darauf angeordneten Magnetfeldsensoren 8 aufnehmen kann. Dazu umfasst die Halteeinrichtung 9 einen ringförmigen Rand 97 (Fig. 9) mit einem daran vorgesehenen Absatz 98, wobei der Absatz 98 radial innenliegend bezüglich des Randes 97 angeordnet ist. Der Absatz 98 ist so ausgestaltet und angeordnet, dass die Platine 7 auf den Absatz 98 gelegt werden kann und an diesem Absatz 98 anliegt. Optional kann die Platine 7 mit mehreren Schrauben 75 auf dem Absatz 98 und damit an der Halteeinrichtung 9 befestigt werden. Vorzugsweise ist der Rand 97 derart ausgestaltet, dass er die Platine 7 bezüglich der axialen Richtung A überragt. Das hat den Vorteil, dass dann die gesamte Halteeinrichtung 9 mit einer Vergussmasse ausgegossen werden kann und dabei die Platine vollständig von der Vergussmasse bedeckt wird.

Fig. 11 zeigt in einer Schnittdarstellung den Spalttopf 21 des Stators 2 des Ausführungsbeispiels der Magnetlagervorrichtung, wobei der Schnitt in der axialen Richtung A erfolgt.

Der Spalttopf 21 mit der becherförmigen Ausnehmung 21 1ist vorzugsweise einstückig ausgestaltet. Der Spalttopf 21 ist vorzugsweise aus einem Kunststoff hergestellt und insbesondere bevorzugt aus einem Kunststoff, der mittels Spritzgiessens verarbeitet werden kann. Der Spalttopf 21 ist somit vorzugsweise als ein Spritzgussteil ausgestaltet. Geeignete Kunststoffe für die Herstellung des Spalttopfs 21 sind beispielsweise Acrylnitril-Butadien-Styrol (ABS), Polyamid (Nylon, PA), Polypropylen (PP), Polytetrafluoroethylene (PTFE), Perfluoroalkoxy Alkane (PFA) Polyvinylchlorid (PVC), Polybutylene Terephthalat (PBT), Polyimid (PI), Polyetereterketon , Polysuccinimid (PSI), Polyphthalamid (PPA) oder Polyether Ether Keton (PEEK),

Der Spalttopf 21 umfasst die becherförmige Ausnehmung 211, in welche der Rotor 3 eingesetzt werden kann, und den radial aussenliegenden Rand 212, welcher im zusammengebauten Zustand den axialen Randbereich 92 der Halteeinrichtung 9 umgreift.

Im Folgenden wird nun noch erläutert, wie die Magnetlagervorrichtung in sehr einfacher Weise zusammengebaut werden kann. Der Zusammenbau kann beispielsweise wie folgt durchgeführt werden. Die Platine 7 mit den darauf angeordneten und befestigten Magnetfeldsensoren 8 wird in die Halteeinrichtung 9 eingefügt. Dazu wird zunächst jeder der Magnetfeldsensoren 8 in eine der Kavitäten 95 eingeschoben und dann die Platine 7 auf den Absatz 98 der Halteeinrichtung 9 aufgelegt. Optional wird die Platine 7 mit den Schrauben 75 an der Halteeinrichtung 9 befestigt.

Anschliessend wird die Halteeinrichtung 9 vollständig mit einer ersten Vergussmasse ausgegossen, derart, dass die Platine 7 vollständig von der ersten Vergussmasse bedeckt ist. Diese erste Vergussmasse ist vorzugsweise eine weiche Vergussmasse. Mit einer weichen Vergussmasse ist eine Vergussmasse gemeint, welche eine Shore-Härte D von weniger als 40 aufweist. Als erste Vergussmasse sind beispielsweise Silikone oder Polyurethane geeignet. Während des Betriebs der Magnetlagervorrichtung 1 können insbesondere im Bereich der Halteeinrichtung 9 mit den darin angeordneten Magnetfeldsensoren 8 stärkere und häufige Temperaturschwankungen auftreten. Gegen solche ist eine weiche Vergussmasse besser beständig. Daher ist für das Ausgiessen der Halteeinrichtung 9 eine weiche Vergussmasse bevorzugt.

Die Spulenkerne 25 werden durch die Aussparungen 91 in der Halteeinrichtung 9 hindurchgeführt und durch die konzentrierten Wicklungen 61. Der magnetische Rückschluss 22 wird zwischen den ersten Enden 261 der Längsschenkel 26 angeordnet. Die Halteeinrichtung 9, der Rückschluss 22 und die Spulenkerne 25 mit den darauf angeordneten konzentrierten Wicklungen 61 werden in einer ersten Einbaurichtung in axialer Richtung A (gemäss der Darstellung in Fig. 2 von der linken Seite) in das Statorgehäuse 101 des Gehäuses 10 eingeführt. Dabei wir das elektrische Verbindungselement 76 parallel zu den Längsschenkeln 26 der Spulenkerne 25 durch das Statorgehäuse 101 bis in das Kontrollgehäuse 102 geführt.

Wenn die Halteeinrichtungen 9, die Wicklungen 61, der Rückschluss 22 und die Spulenkerne 25 in dem Statorgehäuse 101 des Gehäuses 10 angeordnet sind, wird der Spalttopf 21 auf das Gehäuse 10 aufgesetzt und dichtend, vorzugsweise hermetisch dicht, mit dem Gehäuse 10 verbunden, wobei zwischen dem Spalttopf 21 und dem Gehäuse 10 die Dichtung 201 angeordnet wird.

Anschliessend wird das Gehäuse 10 der Magnetlagervorrichtung 1 mit einer thermisch leitenden Vergussmasse ausgegossen. Vorzugsweise wird hierfür eine zweite Vergussmasse verwendet, die thermisch gut leitend ist, und die verschieden ist von der ersten Vergussmasse. Die zweite, thermisch leitende Vergussmasse ist vorzugsweise härter als die erste Vergussmasse. Die zweite thermische Vergussmasse soll eine besonders gute thermische Leitfähigkeit haben, um die im Betriebszustand generierte Wärme schnell und zuverlässig in das Gehäuse abzuleiten, von wo die Wärme dann hauptsachlich mittels Konvektion abgeführt wird. Als zweite, thermische leitende Vergussmasse sind beispielsweise Polyurethane, Epoxidharze, Acrylharze oder Polyester geeignet.

Nachdem das Statorgehäuse 101 des Gehäuses 10 mit der zweiten Vergussmasse ausgegossen ist, wird die Kontrolleinheit 40 in einer zweiten Einbaurichtung in das Kontrollgehäuse 102 des Gehäuses 10 eingesetzt, wobei die zweite Einbaurichtung entgegengesetzt zur ersten Einbaurichtung ist. Gemäss der Darstellung in Fig. 2 wird also die Kontrolleinheit 40 von rechts in das Kontrollgehäuse 102 eingesetzt. Das elektrische Verbindungselement 76 wird mit der Kontrolleinheit 40 verbunden.

Wenn die Kontrolleinheit 40 in dem Kontrollgehäuse 102 des Gehäuses 10 angeordnet ist, wird der Gehäusedeckel 11 auf das Gehäuse 10 aufgesetzt und dichtend, vorzugsweise hermetisch dicht, mit dem Gehäuse 10 verbunden, wobei zwischen dem Gehäusedeckel 11 und dem Gehäuse 10 das Dichtungselement 105 angeordnet wird. Der Gehäusedeckel 11 wir beispielsweise mittels mehrerer Schrauben 111 (Fig. 1) am Gehäuse 10 befestigt.

Optional kann auch das Kontrollgehäuse 102 des Gehäuses 10 mit einer Vergussmasse ausgegossen werden, beispielsweise für Anwendungen mit stark korrosiven oder aggressiven oder explosiven Fluiden. Falls auch das Kontrollgehäuse ausgegossen wird, so erfolgt dies, bevor der Gehäusedeckel 11 auf das Gehäuse 10 aufgesetzt und fest mit diesem verbunden wird.

Durch die Erfindung wird ferner eine Zentrifugalpumpe 100 zum Fördern eines Fluids vorgeschlagen, die dadurch gekennzeichnet ist, dass die Zentrifugalpumpe 100 eine Magnetlagervorrichtung 1 und einen Rotor 3 umfasst, wobei die Magnetlagervorrichtung 1 erfindungsgemäss ausgestaltet ist. Dabei ist die Magnetlagervorrichtung 1 derart ausgestaltet, dass sie zusätzlich zur berührungslos magnetischen Lagerung des Rotors 3 ein auf den Rotor 3 wirkendes Drehmoment erzeugen kann, dass dessen Rotation um die axiale Richtung A antreibt.

Fig. 12 zeigt ein Ausführungsbeispiel einer erfindungsgemässen Zentrifugalpumpe, die gesamthaft mit dem Bezugszeichen 100 bezeichnet ist, in einer schematischen Schnittdarstellung in einem Schnitt in axialer Richtung A. In Fig. 12 sind zum besseren Verständnis und aus Gründen der besseren Übersicht das Gehäuse 10 und der Spalttopf 21 nicht dargestellt.

Die Zentrifugalpumpe 100 umfasst eine Pumpeneinheit 50 mit einem Pumpengehäuse 51, das einen Einlass 52 und einen Auslass 53 für das zu fördernde Fluid umfasst, wobei der Rotor 3 im Pumpengehäuse 51 angeordnet ist, und eine Mehrzahl von Flügeln 54 zum Fördern des Fluids umfasst. Die Pumpeneinheit 50 ist derart ausgestaltet, dass die Pumpeneinheit 50 so in den Spalttopf 21 des Stators 2 einsetzbar ist, dass der magnetisch wirksame Kern 31 des Rotors 3 von den Stirnflächen 271 der Querschenkel 27 umgeben wird.

Ein vorteilhafter Aspekt ist es, dass der Rotor 3 als Integralrotor ausgestaltet ist, weil er sowohl der Rotor 3 der magnetischen Lagerung ist als auch der Rotor 3 der Zentrifugalpumpe 100, mit welchem das Fluid gefördert wird. Diese Ausgestaltung als Integralrotor bietet den Vorteil einer sehr kompakten und platzsparenden Ausgestaltung.

Der Stator 2 ist in dem Gehäuse 10 (in Fig. 12 nicht dargestellt) angeordnet, das vorzugsweise zusammen mit dem Spalttopf 21 als hermetisch dichtes Gehäuse 10 ausgestaltet ist. Die Kontrolleinheit 40 ist vorzugsweise, aber nicht notwendigerweise auch in dem Gehäuse 10 angeordnet. Das Gehäuse 10 ist vorzugsweise mit einer Vergussmasse, beispielsweise mit einem Epoxidharz, einem Acrylharz, einem Polyester oder einem Polyurethan aufgefüllt, sodass alle Komponenten, die im Inneren des Gehäuses 20 angeordnet sind, von der Vergussmasse umgeben sind.

Die Pumpeneinheit 50 ist in der becherförmige Ausnehmung 211 des Spalttopfes 21 (in Fig. 12 nicht dargestellt) angeordnet, sodass der in dem Pumpengehäuse 51 vorgesehene Rotor 3 von dieser becherförmigen Ausnehmung 211 umgeben wird, wobei der magnetisch wirksame Kern 31 des Rotors 3 zwischen den Querschenkeln 27 der Spulenkerne 26 angeordnet ist.

Das Pumpengehäuse 51 ist am Gehäuse 20 fixiert, vorzugsweise mit einer Mehrzahl von Schrauben (nicht dargestellt).

Der Rotor 3 umfasst die Mehrzahl von Flügeln 54 zum Fördern des Fluids. Bei dem hier beschriebenen Ausführungsbeispiel sind beispielsweise insgesamt vier Flügel 54 vorgesehen, wobei diese Anzahl beispielhaften Charakter hat. Der Rotor 3 umfasst ferner eine Ummantelung 38, mit welcher der magnetisch wirksame Kern 31 des Rotors 3 umschlossen und vorzugsweise hermetisch eingekapselt ist, sodass der magnetisch wirksame Kern 31 des Rotors 3 nicht in Kontakt mit dem zu fördernden Fluid kommt. Alle Flügel 54 sind auf der Ummantelung 38 angeordnet und bezüglich der Umfangsrichtung des Rotors 3 äquidistant angeordnet. Jeder Flügel 54 erstreckt sich in radialer Richtung nach aussen und ist drehfest mit dem Ummantelung 38 verbunden. Die Flügel 54 können separate Komponenten sein, die dann auf der Ummantelung 38 fixiert werden. Es ist natürlich auch möglich, dass alle Flügel 54 integraler Bestandteil der Ummantelung 38 sind, dass also die Ummantelung 38 mit allen Flügeln 54 einstückig ausgestaltet ist. Der Rotor 3 mit den Flügeln 54 bildet das Flügelrad bzw. das Laufrad der Zentrifugalpumpe 100, mit welchem auf das Fluid oder die Fluide eingewirkt wird.

Je nach Anwendungsfall, ist es bevorzugt, wenn das Pumpengehäuse 51 der Pumpeneinheit 50 sowie die Ummantelung 38 und die Flügel 54 aus einem oder mehreren Kunststoffen hergestellt werden. Geeignete Kunststoffe sind: Polyethylene (PE), Low Density Polyethylene (LDPE), Ultra Low Density Polyethylene (ULDPE), Ethylene Vinyl Acetate (EVA), Polyethylene Terephthalate (PET), Polyvinylchlorid (PVC), Polypropylene (PP), Polyurethan (PU), Polyvinylidene Fluoride (PVDF), Acrylonitrile Butadiene Styrene (ABS), Polyacryl, Polycarbonate (PC), Polyetheretherketon (PEEK) oder Silicone. Für viele Anwendungen sind auch die unter dem Markennamen Teflon bekannten Materialien Polytetrafluoroethylene (PTFE) und und Perfluoralkoxy-Polymere (PFA) als Kunststoff geeignet.

Es versteht sich, dass die erfindungsgemässe Magnetlagervorrichtung 1 auch für andere Vorrichtungen als Zentrifugalpumpen geeignet ist, beispielsweise für Mischvorrichtungen zum Mischen fliessfähiger Substanzen, für Rührvorrichtungen, beispielsweise zum Durchmischen eines Fluids in einem Tank, für Lüfter oder auch für Vorrichtungen zum Tragen und Rotieren von Wafern, beispielsweise in der Halbleiterfertigung.

## Patentansprüche

1. Magnetlagervorrichtung zur berührungslos magnetischen Lagerung eines Rotors (3), der einen scheibenförmigen oder ringförmigen magnetisch wirksamen Kern (31) umfasst, wobei die Magnetlagervorrichtung einen Stator (2) aufweist, welcher eine Mehrzahl von Spulenkernen (25) umfasst, von denen jeder einen Längsschenkel (26) umfasst, welcher sich von einem ersten Ende (261) in einer axialen Richtung (A) bis zu einem zweiten Ende (262) erstreckt, sowie einen Querschenkel (27), welcher an dem zweiten Ende (262) des Längsschenkels angeordnet ist, und sich in einer radialen Richtung erstreckt, die senkrecht zur axialen Richtung (A) ist, wobei an jedem Längsschenkel (26) mindestens eine konzentrierte Wicklung (61) vorgesehen ist, welche den jeweiligen Längsschenkel (26) umgibt, wobei der Stator (2) ferner eine becherförmige Ausnehmung (211) aufweist, in welche der Rotor (3) einsetzbar ist, wobei die becherförmige Ausnehmung (211) an einem axialen Ende des Stators (2) angeordnet ist, wobei die Querschenkel (27) um die becherförmige Ausnehmung (211) herum angeordnet sind, und wobei eine Mehrzahl von Magnetfeldsensoren (8) zur Bestimmung der Position des Rotors (3) um die becherförmigen Ausnehmung (211) herum angeordnet ist, **dadurch gekennzeichnet, dass** eine ringförmige Halteeinrichtung (9) für die Magnetfeldsensoren (8) vorgesehen ist und dass bei der Magnetlagervorrichtung bezüglich der axialen Richtung (A) zwischen den Wicklungen (61) und den Querschenkeln (27) eine Platine (7) angeordnet ist, auf welcher alle Magnetfeldsensoren (8) angeordnet sind, und dass die Halteeinrichtung (9) zum Aufnehmen der Platine (7) ausgestaltet ist.

2. Magnetlagervorrichtung nach Anspruch 1, wobei die Halteeinrichtung (9) einen ringförmigen Rand (97) mit einem daran vorgesehen Absatz (98) aufweist, wobei der Absatz (98) radial innenliegend bezüglich des Rands (97) angeordnet ist, und wobei die Platine (7) an dem Absatz (98) anliegt.

3. Magnetlagervorrichtung nach Anspruch 2, wobei der Rand (97) derart ausgestaltet ist, dass er die Platine (7) bezüglich der axialen Richtung (A) überragt.

4. Magnetlagervorrichtung nach einem der vorangehenden Ansprüche, wobei die Halteeinrichtung (9) für jeden Spulenkern (25) eine separate Aussparung (91) aufweist, und den Querschenkel (27) des Spulenkerns (25) aufnimmt.

5. Magnetlagervorrichtung nach einem der vorangehenden Ansprüche, bei welcher genau sechs Spulenkerne (25) vorgesehen sind.

6. Magnetlagervorrichtung nach einem der vorangehenden Ansprüche, welche genau sechs Magnetfeldsensoren (8) umfasst, die vorzugsweise äquidistant um die becherförmige Ausnehmung (211) herum angeordnet sind.

7. Magnetlagervorrichtung nach einem der vorangehenden Ansprüche, wobei die Halteeinrichtung (9) mit einer ersten Vergussmasse aufgefüllt ist, derart, dass die Platine (7) vollständig von der Vergussmasse bedeckt ist.

8. Magnetlagervorrichtung nach einem der vorangehenden Ansprüche, wobei der Stator (2) einen Spalttopf (21) aufweist, welcher ein axiales Ende des Stators (2) bildet, wobei der Spalttopf (21) die becherförmige Ausnehmung (211) aufweist, in welche der Rotor (3) einsetzbar ist und wobei der Spalttopf (21) die Halteeinrichtung (9) radial aussenliegend umfasst.

9. Magnetlagervorrichtung nach Anspruch 8, wobei der Spalttopf (21) fest mit dem Gehäuse (10) verbunden ist, mittels einer formschlüssigen Verbindung und/oder mittels einer elastischen Dichtung (201).

10. Magnetlagervorrichtung nach einem der vorangehenden Ansprüche, wobei die elektrischen Verbindungen zum Ansteuern der Magnetfeldsensoren (8) und zum Empfangen der Messsignale auf der Platine (7) hergestellt werden.

11. Magnetlagervorrichtung nach einem der vorangehenden Ansprüche mit einem Gehäuse (10), welches ein Statorgehäuse (101) und ein Kontrollgehäuse (102) umfasst, welche bezüglich der axialen Richtung (A) benachbart zueinander angeordnet sind, wobei das Statorgehäuse (101) zur Aufnahme der Spulenkerne (25) mit den darauf angeordneten konzentrierten Wicklungen (61) ausgestaltet ist, und das Kontrollgehäuse (102) zur Aufnahme einer Kontrolleinheit (40) für die Ansteuerung und die Versorgung der Wicklungen (61) mit elektrischer Energie zur Erzeugung elektromagnetischer Felder.

12. Magnetlagervorrichtung nach Anspruch 11, wobei das Gehäuse (10) derart ausgestaltet ist, dass die Spulenkerne (25) mit den darauf angeordneten konzentrierten Wicklungen (61) in einer ersten Einbaurichtung in axialer Richtung (A) in das Statorgehäuse (101) einführbar sind, und die Kontrolleinheit (40) in einer zweiten Einbaurichtung in das Kontrollgehäuse (102) einführbar ist, wobei die erste Einbaurichtung entgegengesetzt zur zweite Einbaurichtung gerichtet ist.

13. Magnetlagervorrichtung nach einem der vorangehenden Ansprüche, wobei der Stator (2) zur Erzeugung eines Drehmoments ausgestaltet ist, mit welchem der Rotor (3) berührungslos magnetisch zur Rotation um die axiale Richtung (A) antreibbar ist.

14. Zentrifugalpumpe zum Fördern eines Fluids, **dadurch gekennzeichnet, dass** die Zentrifugalpumpe eine Magnetlagervorrichtung (1) gemäss Anspruch 13 umfasst, sowie einen Rotor (3) mit einem magnetisch wirksamen Kern (31), wobei der Rotor (3) in die becherförmige Ausnehmung (211) des Spalttopfes (21) einsetzbar ist, und wobei der Rotor (3) als Rotor (3) der Zentrifugalpumpe ausgestaltet ist.

## Claims

1. A magnetic levitation device for contactless magnetic levitation of a rotor (3) comprising a disk-shaped or ring-shaped magnetically effective core (31), wherein the magnetic levitation device has a stator (2) which comprises a plurality of coil cores (25), each of which comprises a longitudinal leg (26) extending from a first end (261) in an axial direction (A) to a second end (262), and a transverse leg (27) which is arranged at the second end (262) of the longitudinal leg and which extends in a radial direction perpendicular to the axial direction (A), wherein at least one concentrated winding (61) is provided at each longitudinal leg (26), which winding surrounds the respective longitudinal leg (26), wherein the stator (2) further has a cup-shaped recess (211) into which the rotor (3) can be inserted, wherein the cup-shaped recess (211) is arranged at an axial end of the stator (2), wherein the transverse legs (27) are arranged around the cup-shaped recess (211), and wherein a plurality of magnetic field sensors (8) for determining the position of the rotor (3) is arranged around the cup-shaped recess (211), **characterized in that** a ring-shaped holding device (9) is provided for the magnetic field sensors (8), and that a circuit board (7) is arranged between the windings (61) and the transverse legs (27) with respect to the axial direction (A), on which circuit board all magnetic field sensors (8) are arranged, and wherein the second holding device (9) is designed for receiving the circuit board (7).

2. The magnetic levitation device according to claim 2, wherein the holding device (9) has a ring-shaped edge (97) with a shoulder (98) provided thereon, wherein the shoulder (98) is arranged radially inwardly with respect to the edge (97), and wherein the circuit board (7) rests against the shoulder (98).

3. The magnetic levitation device according to claim 3, wherein the edge (97) is designed in such a way that it projects beyond the circuit board (7) with respect to the axial direction (A).

4. The magnetic levitation device according to any one of the preceding claims, wherein the holding device (9) has a separate notch (91) for each coil core (25), which notch encloses the coil core (25) and receives the transverse leg (27) of the coil core (25).

5. The magnetic levitation device according to any one of the preceding claims, in which exactly six coil cores (25) are provided.

6. The magnetic levitation device according to any one of the preceding claims, which comprises exactly six magnetic field sensors (8), which are preferably arranged equidistantly around the cup-shaped recess (211).

7. The magnetic levitation device according to any one of the claims 2 to 8, wherein the holding device (9) is filled with a first potting compound in such a way that the circuit board (7) is completely covered by the potting compound.

8. The magnetic levitation device according to any one of the preceding claims, wherein the stator (2) has a containment can (21) which forms an axial end of the stator (2), wherein the containment can (21) has the cup-shaped recess (211) into which the rotor (3) can be inserted and wherein the containment can (21) embraces the second holding device (9) radially outwardly.

9. The magnetic levitation device according to claim 8, wherein the containment can (21) is fixedly connected to the housing (10) by means of a form-locking connection and/or by means of an elastic seal (201).

10. The magnetic levitation device according to any one of the preceding claims, wherein the electrical connections for actuating the magnetic field sensors (8) and for receiving the measurement signals are established on the circuit board (7).

11. The magnetic levitation device according to any one of the preceding claims, with a housing (10) which comprises a stator housing (101) and a control housing (102) which are arranged adjacent to each other with respect to the axial direction (A), wherein the stator housing (101) is designed for receiving the coil cores (25) with the concentrated windings (61) arranged thereon, and the control housing (102) for receiving a control unit (40) for controlling and supplying the windings (61) with electrical energy for generating electromagnetic fields.

12. The magnetic levitation device according to claim 12, wherein the housing (10) is designed in such a way that the coil cores (25) with the concentrated windings (61) arranged thereon can be inserted into the stator housing (101) in a first installation direction in the axial direction (A), and the control unit (40) can be inserted into the control housing (102) in a second installation direction, wherein the first installation direction is directed in the opposite direction to the second installation direction.

13. The magnetic levitation device according to any one of the preceding claims, wherein the stator (2) is designed for generating a torque with which the rotor (3) can be driven magnetically without contact for rotation about the axial direction (A).

14. A centrifugal pump for conveying a fluid, **characterized in that** the centrifugal pump comprises a magnetic levitation device (1) according to claim 14, and a rotor (3) with a magnetically effective core (31), wherein the rotor (3) can be inserted into the cup-shaped recess (211) of the containment can (21), and wherein the rotor (3) is designed as the rotor (3) of the centrifugal pump.

## Revendications

1. Dispositif à lévitation magnétique pour la lévitation magnétique sans contact d'un rotor (3), qui comprend un noyau (31) magnétiquement actif en forme de disque ou annulaire, le dispositif à lévitation magnétique présentant un stator (2), qui comprend une pluralité de noyaux de bobine (25), dont chacun comprend une branche longitudinale (26), qui s'étend d'une première extrémité (261) dans une direction axiale (A) jusqu'à une deuxième extrémité (262), ainsi qu'une branche transversale (27), qui est disposée au niveau de la deuxième extrémité (262) de la branche longitudinale, et s'étend dans une direction radiale, qui est perpendiculaire à la direction axiale (A), au moins un enroulement concentré (61) étant prévu au niveau de chaque branche longitudinale (26), lequel entoure la branche longitudinale (26) respective, le stator (2) présentant en outre un évidement en forme de godet (211), dans lequel le rotor (3) peut être inséré, l'évidement en forme de godet (211) étant disposé au niveau d'une extrémité axiale du stator (2), les branches transversales (27) étant disposées autour de l'évidement en forme de godet (211), et une pluralité de capteurs de champ magnétique (8) étant disposée autour de l'évidement en forme de godet (211) pour déterminer la position du rotor (3), **caractérisé en ce qu'**un dispositif de retenue annulaire (9) pour les capteurs de champ magnétique (8) est prévu et **en ce que** dans le dispositif à lévitation magnétique, par rapport à la direction axiale (A), une platine (7) est disposée entre les enroulements (61) et les branches transversales (27), sur laquelle platine tous les capteurs de champ magnétique (8) sont disposés, et **en ce que** le dispositif de retenue (9) est configuré pour recevoir la platine (7).

2. Dispositif à lévitation magnétique selon la revendication 1, le dispositif de retenue (9) présentant un bord annulaire (97) avec un épaulement (98) prévu au niveau de celui-ci, l'épaulement (98) étant disposé radialement à l'intérieur par rapport au bord (97), et la platine (7) s'appliquant contre l'épaulement (98).

3. Dispositif à lévitation magnétique selon la revendication 2, le bord (97) étant configuré de telle sorte qu'il dépasse de la platine (7) par rapport à la direction axiale (A).

4. Dispositif à lévitation magnétique selon l'une quelconque des revendications précédentes, le dispositif de retenue (9) présentant pour chaque noyau de bobine (25) un évidement séparé (91), et recevant la branche transversale (27) du noyau de bobine (25).

5. Dispositif à lévitation magnétique selon l'une quelconque des revendications précédentes, dans lequel exactement six noyaux de bobine (25) sont prévus.

6. Dispositif à lévitation magnétique selon l'une quelconque des revendications précédentes, qui comprend exactement six capteurs de champ magnétique (8), qui sont disposés de préférence de manière équidistante autour de l'évidement en forme de godet (211).

7. Dispositif à lévitation magnétique selon l'une quelconque des revendications précédentes, le dispositif de retenue (9) étant rempli d'une première masse de scellement, de telle sorte que la platine (7) soit complètement recouverte par la masse de scellement.

8. Dispositif à lévitation magnétique selon l'une quelconque des revendications précédentes, le stator (2) présentant une cloche de confinement (21), qui forme une extrémité axiale du stator (2), la cloche de confinement (21) présentant l'évidement en forme de godet (211), dans lequel le rotor (3) peut être inséré, et la cloche de confinement (21) comprenant le dispositif de retenue (9) radialement à l'extérieur.

9. Dispositif à lévitation magnétique selon la revendication 8, la cloche de confinement (21) étant connecté fixement au boîtier (10), au moyen d'une connexion par engagement par correspondance de forme et/ou au moyen d'un joint d'étanchéité élastique (201).

10. Dispositif à lévitation magnétique selon l'une quelconque des revendications précédentes, les connexions électriques pour la commande des capteurs de champ magnétique (8) et pour la réception des signaux de mesure étant établies sur la platine (7).

11. Dispositif à lévitation magnétique selon l'une quelconque des revendications précédentes avec un boîtier (10), qui comprend un boîtier de stator (101) et un boîtier de contrôle (102), qui sont disposés de manière adjacente l'un à l'autre par rapport à la direction axiale (A), le boîtier de stator (101) étant configuré pour recevoir les noyaux de bobine (25) avec les enroulements concentrés (61) disposés sur ceux-ci, et le boîtier de contrôle (102) étant configuré pour recevoir une unité de contrôle (40) pour la commande et l'alimentation des enroulements (61) en énergie électrique pour la génération de champs électromagnétiques.

12. Dispositif à lévitation magnétique selon la revendication 11, le boîtier (10) étant configuré de telle sorte que les noyaux de bobine (25) avec les enroulements concentrés (61) disposés sur ceux-ci puissent être introduits dans le boîtier de stator (101) dans une première direction de montage dans la direction axiale (A), et l'unité de contrôle (40) puisse être introduite dans le boîtier de contrôle (102) dans une deuxième direction de montage, la première direction de montage étant orientée de manière opposée à la deuxième direction de montage.

13. Dispositif à lévitation magnétique selon l'une quelconque des revendications précédentes, le stator (2) étant configuré pour générer un couple, avec lequel le rotor (3) peut être entraîné magnétiquement sans contact pour la rotation autour de la direction axiale (A).

14. Pompe centrifuge pour le transport d'un fluide, **caractérisée en ce que** la pompe centrifuge comprend un dispositif à lévitation magnétique (1) selon la revendication 13, ainsi qu'un rotor (3) avec un noyau magnétiquement actif (31), le rotor (3) pouvant être inséré dans l'évidement en forme de godet (211) de la cloche de confinement (21), et le rotor (3) étant configuré en tant que rotor (3) de la pompe centrifuge.
